(19) **Europäisches Patentamt / European Patent Office / Office européen des brevets**

(11) **EP 2 133 829 A1**

(12) # EUROPEAN PATENT APPLICATION

(43) Date of publication:
**16.12.2009 Bulletin 2009/51**

(51) Int Cl.:
***G06N 7/06*** *(2006.01)*

(21) Application number: **08290535.7**

(22) Date of filing: **10.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Integrative Biocomputing S.a.r.l.**
**35135 Chantepie (FR)**

(72) Inventor: **Siregar, Pridi**
**35760 Montgermont (FR)**

(74) Representative: **Carter, Stephen John et al**
**Mewburn Ellis LLP**
**33 Gutter Lane**
**London**
**EC2V 8AS (GB)**

(54) **Simulation of complex systems**

(57) The invention provides a software architecture for generating and self-assembling multi-scale computer models of dynamic systems, in a way that mimics (bottom-up) morphogenesis in living organisms, but with the addition of (top-down) constraints that result in efficient model generation. Once generated, the model can be used for simulations within the same software architecture. Exemplary applications include the generation of models for the simulation of: human cells / organs; non-living physical artefacts; business processes; urban environments; nanotech structures. Non-modelling applications for the architecture are also envisaged, including: data mining applications; decision making; e-learning/ training and self-programming agents.

The architecture itself comprises a collection of nested physical objects ("FUs") and a related, parallel collection of nested agents ("PSUs") that can act on the physical objects.

FIG. 24

**Description**

FIELD OF THE INVENTION

This invention relates to simulation of complex systems. More specifically, the invention provides a software architecture for the generation, simulation and optimisation of complex systems. The invention is particularly (although not exclusively) suited to modelling biological systems.

BACKGROUND

The availability of complete genomic sequences has initiated the post genomic era. This era requires tremendous computational resources. One of the main reasons is the *exponential growth* of information that has led to the utter dependence of genomic research on computer science. This has led to new fields such as bioinformatics which is defined as the application of computational techniques to understand and organize the information associated with biological macromolecules.

Another very active field of investigation is computational biology (CB) aimed at modelling and simulating biological systems on a computer. The ideal computational model will integrate all pertinent space-time scales: DNA, RNA, proteins, cells, tissues, organs and entire biological systems. However, worldwide research in CB is quite heterogeneous, both in terms of the level(s) of description addressed and in the methodology. There is indeed a clear separation between people working at the tissue level and upward, and those working at the sub-cellular levels. Typically, the sub-cellular level is modelled by systems of ordinary differential equations (ODE)[30][40][46], Stochastic models [41], or Petri Nets [20][31], while the supra-cellular level is represented by constitutive equations, e.g., partial differential equations (PDE), that correspond to tissue, organs and whole body continuum models [3].

The reason behind this situation is probably historical. Computational biology was initially penetrated by people coming mainly from the electrical and mechanical engineering disciplines. Hence, there is a strong emphasis, even today, (see 7th European Initiative White paper [3]) towards using continuum models. The post-genomic era has massively brought people from other disciplines to the modelling arena. They include biologists, bio-chemists and computer scientists. Biologists and computer scientists are more inclined to view the world as a construction of discrete entities. For instance, the literature abounds in Boolean-network model [42], Petri Nets to model sub-cellular events. Systems of ODE on the other hand are well rooted in chemical process engineering but like their macro-level models counterparts, they deal with continuous quantities.

As a result, different modelling approaches tend to highlight particular dynamical features of living organisms such as mass/ energy fluxes and mechanical work in the case of continuum models, and the logic of gene switching in the case of Boolean-network model and Petri Nets. One of the concerns of international projects such as the Physiome Science [21][22][45] and the 7th European Initiative [3] is the mapping from sub-cellular level events to the parameters of the macro-level constitutive equations. This mapping issue exists only because of the heterogeneity of the models. In reality, subcellular, cell membrane, and supra-cellular events obey the same scale-invariant physical laws where "particles" interact with "fields".

SUMMARY OF THE INVENTION

In general terms, embodiments of the invention provide a software architecture for generating and self-assembling multi-scale computer models of dynamic systems, preferably in a way that mimics (bottom-up) morphogenesis in living organisms, but with the addition of (top-down) constraints that result in efficient model generation

The architecture of preferred embodiments is bi-layered and corresponds to two isomorphic parallel structures: a structure of (nested) dynamic systems, and a structure of (nested) agents that perceive and act on the (nested) dynamic systems or act upon themselves. Agent perception and action is made possible because all system component models as well as the system model itself are self-descriptive and represented in declarative form that lends itself well to meta-level analysis and actions. The structure of (nested) communicating agents constitutes also a dynamic system of cognitive processes that can self-organize in parallel with the object level system under study.

In a little more details, the architecture itself comprises a collection of nested physical objects (e.g. dynamic systems) referred to in the following as "functional units" ("FUs") and a related, parallel collection of nested agents, referred to in the following as "problem solving units" ("PSUs") that can act on the physical objects (and optionally also on themselves).

In preferred embodiments, the 'building blocks' of the architecture are:

- SUs (structural units) - elementary physical structure - linked to a corresponding FU, linked to a KB shared with other SUs of the same class, and with characteristics held in a short term memory.

- FUs (functional units) - (nested) dynamic structural units, representative of the 'real world' objects being modelled - linked to an MFU, linked to one or more SUs (one of which is a "central" SU), linked to mother and daughter FUs (if any), linked to a KB shared with other FUs of the same class, with characteristics stored in a short term memory and with a history stored in a long term memory.

- MFUs - abstract (fictive) unit - control self-assembly by experiencing force fields (and imaginary morphogenetic fields where applicable), linked to corresponding FU.

- PSU (problem solving units) - (nested) agents that perceive and act on the FUs.

- KBs (knowledge bases) - contain knowledge relevant to the SU or FU class with which they are associated.

By using this novel architecture it becomes possible to efficiently generate models of complex systems through processes of self-assembly in the manner described further below.

In one aspect, the invention provides a computer simulation model of a biological system as set forth in claim 1. Claims 2 to 11 set forth some optional features of the model.

In another aspect, the invention provides a computer simulation model of a complex system as set forth in claim 12. A complex system in this context is a system comprised of multiple interacting objects. The objects will typically, but need not necessarily be, physical objects.

The optional features set forth in claims 2 to 11 are equally applicable to the model of claim 12.

In another aspect, the invention provides a data structure (architecture) for use in building a model of a biological or other complex system, comprising one or more (and preferably all) of the 'building blocks' referred to above.

In another aspect, the invention provides a method of simulating a biological or other complex system using a model as set forth in claim 1 or claim 12.

In another aspect the invention provides a method of generating a model of a biological or other complex system by enabling the 'building blocks' identified above to self-assemble. Preferably the self-assembly mimics morphogenesis in living organisms, although it is also preferable that the self-assembly is subject to one or more constraints.

BRIEF DESCRIPTION OF THE DRAWINGS

Embodiments of the invention will now be described by way of example, with reference to the accompanying drawings in which:

Figs. 1 to 22 are used to illustrate an embodiment of the invention as applied to the modelling of a human kidney;

Fig. 23 schematically illustrates an ontology (layered organization of concepts) applicable to embodiments of the present invention;

Fig. 24 schematically shows the general structure of a functional unit (FU) in accordance with an embodiment of the present invention;

Fig. 25 schematically shows a general recursive FU-architecture comprising a network of nested FUs of the structure shown in fig. 24;

Fig. 26 schematically illustrates the relationship between an FU and its associated problem solving unit (PSU);

Fig. 27 schematically illustrates a structure of (nested) dynamic systems (FUs) and a structure of associated (nested) agents (PSUs) that perceive and act on the dynamic systems and upon themselves;

Fig. 28 illustrates the manner in which a domain-specific problem can be mapped onto a core ontology problem;

Fig. 29 illustrates the manner in which multiple PSUs can share a common pool of Inference Engines and Problem Solving Methods and FUs can share a common pool of Physics based simulators;

Fig. 30 schematically shows the interaction between MFUs during a self assembly process;

Fig. 31 illustrates the use of SAs associated with MFUs representing mathematical operators and objects to define contact points between the objects and the operators;

Figs. 32a and 32b illustrate a morphogenesis-based model generation process for a tubular structure;

Fig. 33 illustrates a morphogenesis-based model generation process for a non-tubular structure;

Fig. 34 illustrates approaches to mixed (discrete and continuous deterministic models) computational methods;

Fig. 35 illustrates the concept of multi-level, hierarchical computations;

Fig. 36 illustrates the suitability of the GMSP architecture for multi-threading computational approaches in clusters and GRIDS;

Figs. 37 and 38 (a & b) illustrate the derivation of knowledge from core knowledge in a KB;

Fig. 39 illustrates goal-directed self-assembly;

Fig. 40 illustrates goal-directed self-assembly with morphogenesis; and

Fig. 41 illustrates the benefits of "omniscient" MFUs.

## DETAILED DESCRIPTION

The following is a description of currently preferred aspects and embodiments, but many variations are possible within the scope of the invention. The architecture that is the subject of this application is referred to generally in the following as 'GMSP' (Generic Modelling and Simulation Platform).

We start with some introductory discussion of important concepts that the present inventor has recognised can be beneficially applied to modelling complex systems before going on to discuss embodiments of the inventive architecture itself in more detail.

### Self-Assembly

Software architectures in accordance with embodiments of the present invention have been developed to enable self-assembly of computer models of dynamic systems in a way that mimics morphogenesis in living organisms.

A fundamental aspect that many CB projects seem to underrate-at least in terms of modelling- is self-organization. Living systems self-organize over a broad range of space-scales ranging from intergalactic interactions, to inter-species interactions, intra-species social organizations, down to molecular self-assembly inside individual living cells [44]. One of the most spectacular and fascinating manifestation of self-organization in living systems is embryogenesis and the morphogenesis of organs during the developmental phase of the embryo. It is during this phase that the exceedingly complex and interwoven structures of tissues and organs are grown out of a "disordered" mesenchyme.

We believe that _only_ morphogenetic-based methods will be able to produce realistic multi-scale 3D models of tissues and cells. Manual modelling can only produce a stereotyped organization by concatenating parametric "template" elements. Today's modern imaging systems (RMI, Scanners) can provide gross anatomical features but are a far cry from "showing" the intricate capillary and lymphatic networks and nerve structures around, say, a small group of cells. Yet if we want to build a Virtual Human, we need to model all the dynamics that occurs around and within its most important unit: the single living cell. The structures involved are individually complex, interwoven, and anisotropic in their physico-chemical properties. The challenge for CB then is to devise self-constructing models that can simulate energy/mass fluxes, mechanical work, and the self-organizing processes that underlie embryogenesis, growth and adult-life adaptivity.

One possible route is through agent technology. Computing science is increasingly adopting metaphors borrowed from biology to develop new computing paradigms. Swarm intelligence and agent technologies exemplify this trend. The living cell epitomizes the "agent" concept. Cells are autonomous social entities that interact and collaborate dynamically with other cells in response to a changing environment. A (computing) agent is a computer system that emulates and extends the cell metaphor by sensing and reacting to their environment (reactivity), may take anticipatory actions (proactivity) and interact with other agents (sociability) to achieve goals.

Computational models in biology need to be fed by biological and medical data in order to improve their performance and realism. This data not only grows exponentially but also in complexity, requiring the support of intelligent data mining tools to retrieve it from the web or from world databases, to infer knowledge from it, and to incorporate the knowledge into the models. Combining computational biology with Knowledge/agent-based systems and artificial intelligence [8][34][37] constitutes the necessary foundation for creating new technologies that will be able to produce models of biological systems while at the same time data-mine for information, and abstract the data into knowledge in order to continuously *self-improve*. In fine, "virtual patients" will be beneficial for drug discovery, medical devices development, genomic-based decision support systems in medicine, and medical education.

## Ontologies

Software architectures dedicated to the generation of computational models must have simulation capabilities to generate the model, a descriptive level to specify what the intended model should be, and a control level to test the fitness of the generated model. In other words they must incorporate qualitative knowledge, quantitative knowledge and simulators. The software must be general enough to cover a broad range of applications and at the same time be tailorable to account for domain-dependant, problem-dependant, and even person-dependant world-views. This raises the question on the nature of "knowledge".

Trying to define knowledge in an absolute sense seems hopeless since there is probably an infinite number of possible reifications of world objects. Research on Ontologies was initiated to rationalize this multiple world-views [37]. Ontologies are defined as "explicit formal specification of how to represent the objects, concepts, and other entities that are assumed to exist in some area of interest and the relationships that holds among them" [3]. Despite the rationalization, people involved in ontological research agree on the fact that there is a myriad of ontologies. Indeed, ontologies simply formalize the (infinite) multiplicities of world-views, it does not reduce their numbers. We can however admit, at least from a human perspective, that knowledge is not totally subjective and that some core knowledge holds and subsumes a great part, if not all, other forms of knowledge.

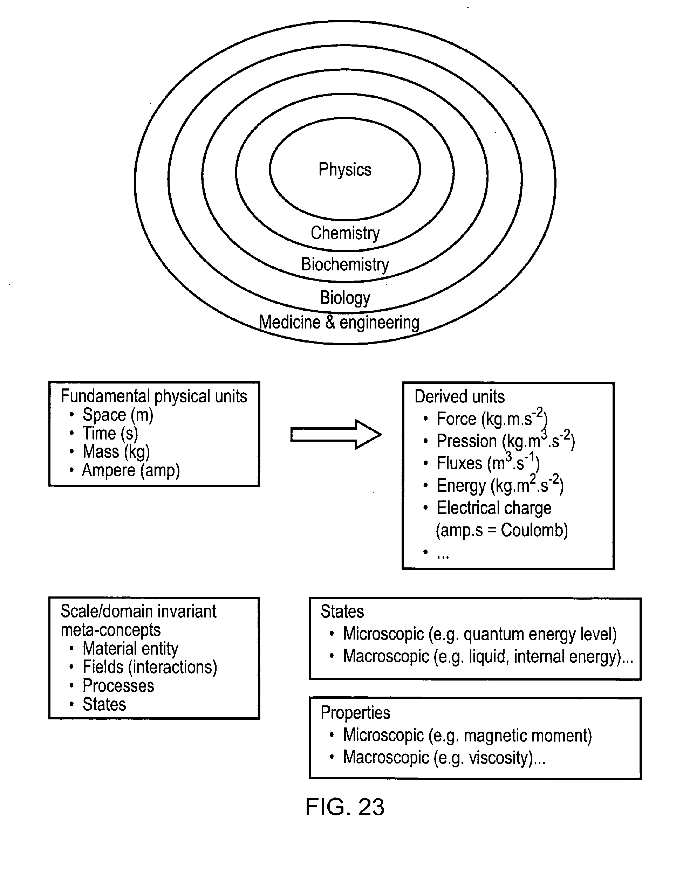

The GMSP's knowledge architecture follows this line of thought (see fig. 23). Each knowledge-base (KB) is organized in a layered organization that reflects our ontological commitment:

- The mathematical world is considered "objective" in the sense that all true mathematical statements are not context, people, or even species dependent.

- Physics reifies the material universe (as perceived by humans) into concepts that can be mapped into a part of the mathematical world. It can be accepted as being "objective" from a human species perspective. As illustrated schematically in fig. 23, physics and its mathematical representations can constitute a core ontology common to all other ontologies that can be organized in layers.

- Chemical concepts are either physical concepts or abstractions thereof.

- Functional and theological concepts are "subjective".

- Life sciences concepts can be physical and chemical concepts or abstractions thereof. But they can also be functional, teleological, metaphorical and analogical incursions of either "objective" or "subjective" concepts.

- Engineering concepts describe the world of artifacts in terms of "objective" and "subjective" concepts with equal importance.

The reason to separate the "objective" world from the world of functional and theological knowledge is to separate what is invariant across domains and people from what is not.

When we describe a dynamic system in functional terms such as "communication transfer", "information storage", or "negative feedback control", some underlying physical structures and processes are at work. Attempting to simulate such notions without reference to the underlying physics can only be done phenomenologically.

In the same vein, when biologists describe the immune system as a network of cells and molecules whose role is to "protect" an organism from potentially "dangerous" foreign particles, objective knowledge, theological knowledge and analogical incursions of human-centred concepts are introduced. Despite the partly subjective character, no one will argue that this is not science. But how do you simulate "dangerous"? Therefore, we need to distinguish the knowledge of the physical world (and the simulators thereof) from knowledge on its meanings, roles, and intended use. This separation constitutes one the cornerstone of our framework.

Adopting an ontology that is common to many applications to which the architecture of the present invention can be put give the following benefits:

- A common KB to all applications - Physics ontology and the corresponding mathematical representations can be encoded in the FUs descriptive KB as the starting point to all applications.

- A common reasoning and problem-solving ground to all applications - Problem-solving methods (PSM) related to physics can be encoded in the PSUs' descriptive KB as the starting point to all applications.

- Mapping all concepts in terms of the core ontology - Teleological and domain-specific concepts can be broken down and/or mapped into the core ontology by progressing between concepts organized in the layered ontologies. The layered ontologies are encoded in the FUs descriptive KB.

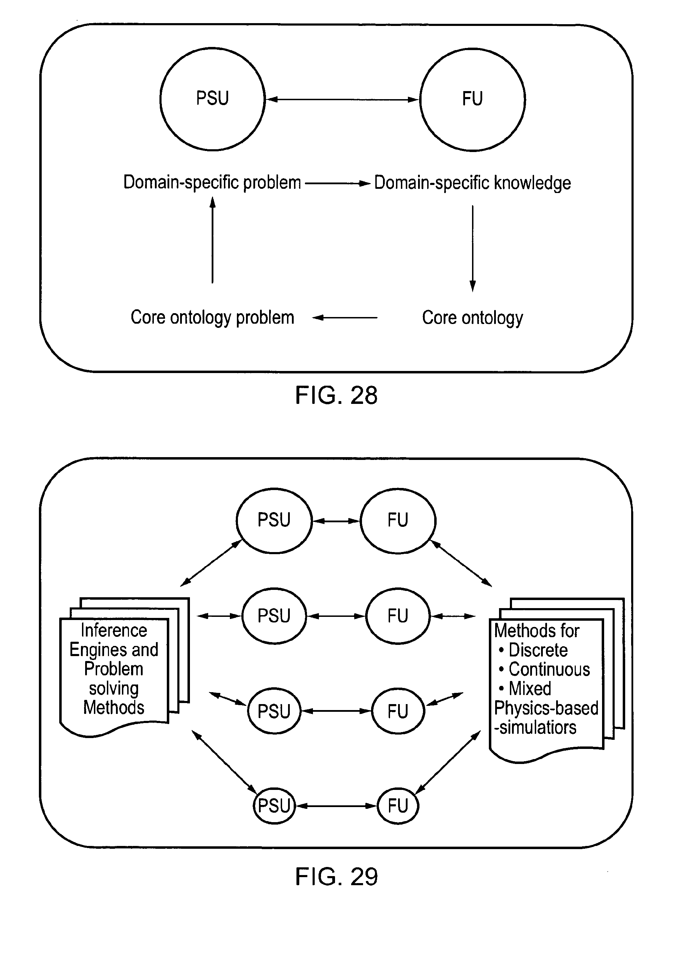

- Mapping all domain-specific problems into core ontology problems (see fig. 28).

Moreover, at all levels of the hierarchy, PSUs and FUs can share, draw upon, and enrich the same pool of, Inference Engines and Problem Solving Methods for PSUs and Physics-based-simulators for FUs (see fig. 29).

## The GMSP Architecture

### Introduction

The Generic Modelling and Simulation Platform (GMSP) is a software architecture organized as a network of nested functional units (FU) that mimics the hierarchical organization of dynamic systems. There are no (theoretical) limits to the nesting therefore one could range from nanoscale interactions to interstellar interactions.

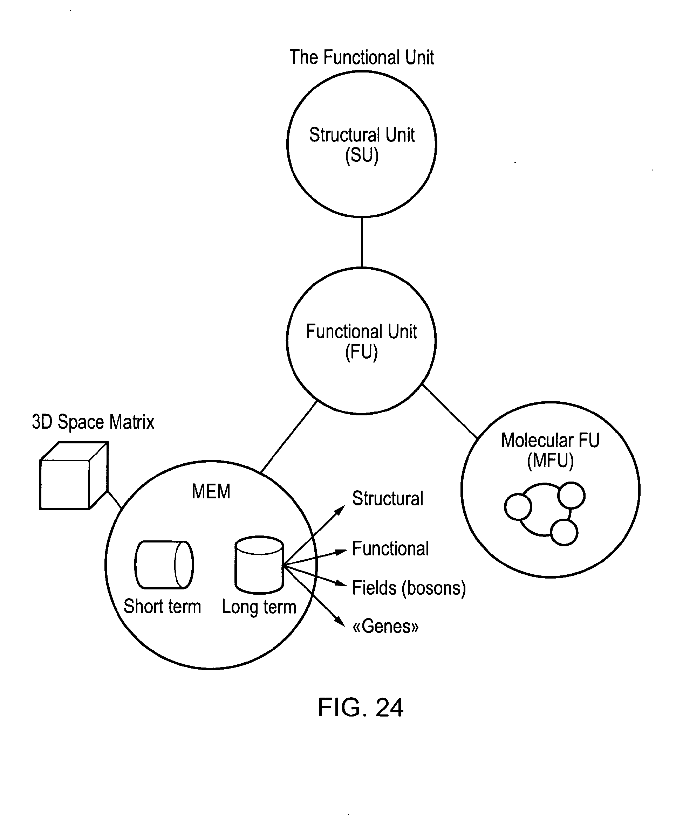

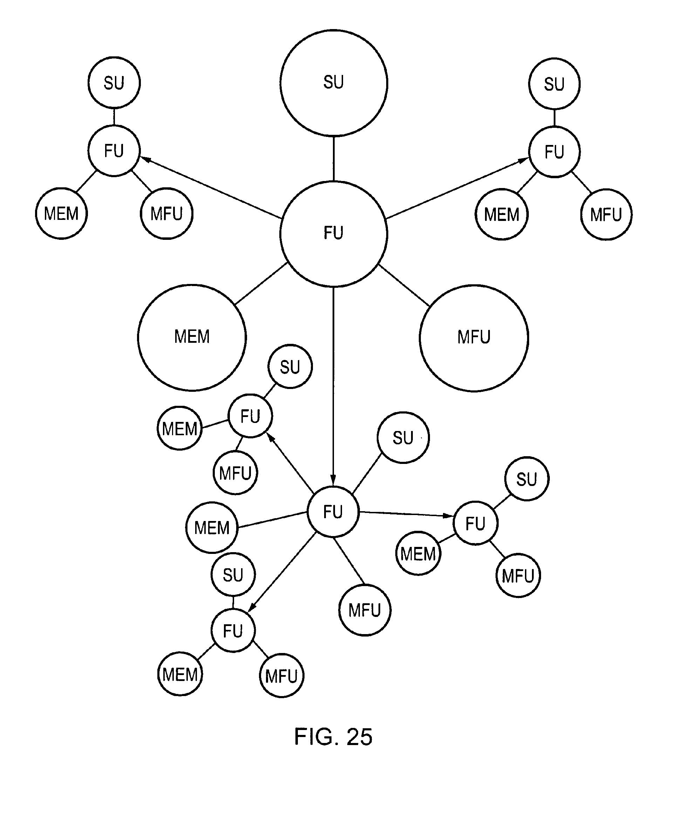

Fig. 24 schematically shows a single FU and fig. 25 shows a network of nested FUs (a recursive FU architecture). The various component parts of the structure (FU, SU, MFU and MEM (memory)) are discussed in greater detail below.

Each (nested) FU represents a dynamical system composed of structural units (SU) that are subject to, or participate in, physical events such as reactive processes, transport problems and control mechanisms. Therefore the GMSP models the world as nested dynamical systems, each level having its own characteristic space and time constants.

Dynamical systems are characterized by their ability to self-organize. In living organisms, molecular level self-organization is mediated by chemical reactions. At the cell and tissue levels, self-organization results in one of the most spectacular phenomena of life: embryogenesis and organogenesis. The GMSP is designed to model self-assembly at all space scales.

One of its first realizations is the morphogenesis of a kidney from virtual stem cells using physics-based simulation methods and morphogenetic principles. Each (nested) FU is thus potentially self-generating. Once, a nth- level FU has been generated, the dynamic processes associated to it can be simulated using the same pool of physics-based simulators.

Each (nested) FU is a self-descriptive model of the physical world. Formal structural, behavioural, functional, and theological knowledge are represented in First Order Logic (FOL) declarative form and its extensions and encoded in each FU's Knowledge Base (KB). Therefore an entire system is self-descriptive in all its components and sub-components.

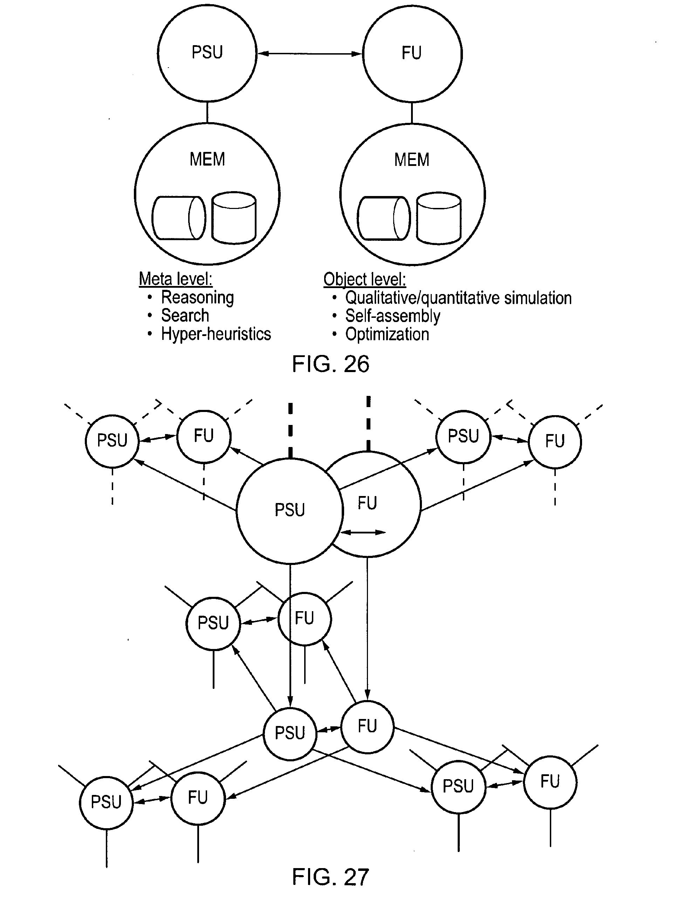

Each (nested) FU is assigned one or more companion Problem Solving Unit (PSU) (see fig. 26). A PSU is a specialized agent that discusses and reasons about the FU. A PSU constitutes a meta-level. It is capable of doing so because FUs are self-descriptive, so PSU can reason about specific FU's features. PSU are also described in terms of structural, behavioural, functional, and theological knowledge but the nature of the knowledge is of the abstract cognitive type. Thus a PSU is a self-descriptive model of cognitive features.

PSU function specialization includes:

- The production of domain-specific queries. These queries can be issued to other agents, a human operator or on the Internet.

- Answering queries

- The production of operational knowledge from "first principles" models

- Selecting and tailoring physics-based simulation methods

- Designing FU-specific optimization tools

- Automated artifact design
Like all intelligent agents, a PSU has internal states, goals, plans, either acts on the world or on itself and communicates with other PSUs.
Thus, the GMSP has two isomorphic and parallel worlds: the world of (nested) physical objects and the world of (nested) agents that perceive and act on the (nested) physical objects or act on themselves (see fig. 27). Both worlds constitute parallel nested dynamical systems. Because of this isomorphic structure, they can both co-evolve and produce particularly efficient and domain-specific modelling, simulation and optimization environment.

In a data-mining context, the companion PSU can be conceived as a search-engine dedicated to regularly update the FU's KBs by eliciting data on the Net. Pertinent queries reflecting the different perspectives about a material or abstract entity can be formulated to web-based data banks and data warehouses. Because of the nesting, the queries can proceed upward and downward and horizontally in terms of structure, function, behaviour or teleonomy. This ability to shift in the vertical and horizontal directions allows a broad spectrum of queries to be formulated and the system to increase its knowledge.

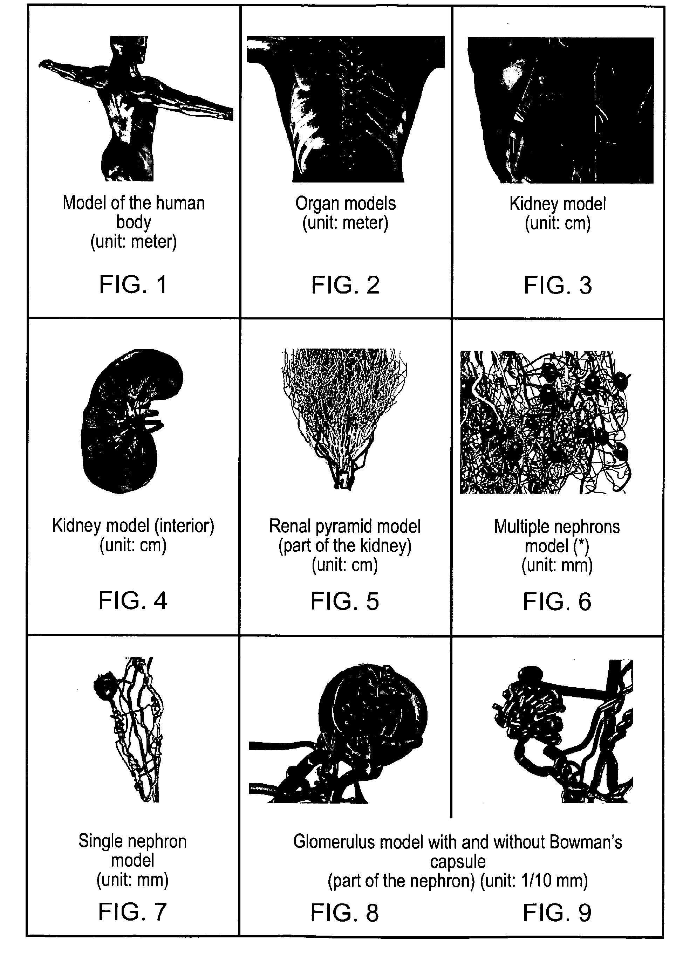

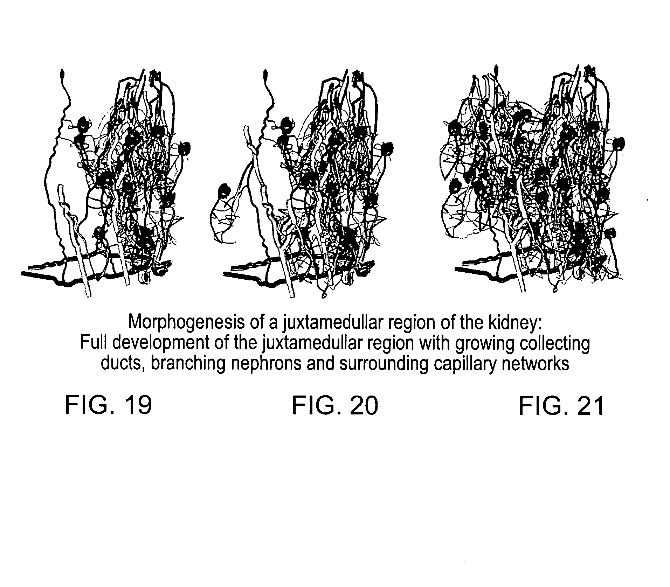

Further details of the component elements and their interactions are discussed below. This discussion of the GMSP architecture concluded with an illustrated example of the use of the architecture to generate a model of a human kidney (see further below) with reference to figs. 1 to 22.

## Structural Units

In the GMSP, the Structural Unit (SU) is the basic Object Oriented (OO) object. Each SU is self-descriptive as it may embody structural, topological, geometrical, and physical knowledge.

To summarize, a SU is an elementary entity with

- A pointer to a corresponding functional unit (see below)

- A short term memory

- A pointer to a descriptive Knowledge base (KB) common to all SUs of the same class

- Property genes encoded in KB that represents SU properties (dimensions, topology, geometry,...)

- Property genes can be evolved using Genetic Algorithms (GA) and variants.

The short term memory contains all dynamic quantitative and qualitative information that characterizes the SU.

## Functional Units

Natural and man-made objects have a hierarchical structure. The organization of matter can be visualized as patterns. They range from atomic and molecular patterns to patterns of cell structures up to galaxy clusters and beyond. Hence, any material object can be represented as a nested structural organization.

In addition a structural unit is usually associated to one or more dynamic processes. Dynamic systems, like structural organizations form hierarchies. Each level corresponds to some kind of functional unit where reactions, mass transfer and control mechanisms operate singly or in combination.

Simply speaking, a functional unit is one or more structural units doing something or where something is happening. The living cell epitomizes this concept.

A living cell is a highly complex chemical reactor. Cell chemical reactions include ATP catabolism that provides the necessary energy for cell functions, and in the opposite direction the synthesis of ATP from glucose and oxygen to store energy. To carry-out their functions cells require mass and energy input/output fluxes. Mass-influxes provide the necessary amino acids, oxygen and glucose to synthesize proteins. Mass-outfluxes correspond to cell metabolic waste such as carbon dioxide and nitrogen-based metabolites. The companion structural units to cells responsible for these mass transfers are nearby capillaries and lymphatic vessels. Finally, cell activity is controlled by chemical messengers such as cytokines and afferent nerve endings.

The same could be said about tissues, organs and biological systems where mass/energy transfer and transformation as well as control mechanisms prevail at all levels of the hierarchy. Thus functional units have a fractal-like organization.

In our framework, a functional unit (FU) is an abstract object that covers a very broad range of entities. This is made possible because these entities are conceptually decomposed and represented according to the same invariant core ontology.

The following is a description of an FU:

- A pointer to an abstract representative "molecule": the (MFU)

- A pointer to a "central" SU

- A short-term memory that includes a 3D space-matrix.

- A long term memory that describes the history of the FU

- A pointer to a descriptive KB common to all FUs of the same class

- A list of pointers to companion SUs (the list can be empty)

- A pointer to the mother FU (if the current FU is nested)

- A list of pointers to contained "daughter" FUs

The descriptive KB includes:

- FU-SU teleological, structural and functional knowledge encoded in FOL (and extensions) (Structural knowledge may include predicates such as AdjacentTo(), ContinuesInto(), OpensInto() that specify spatial relationships of contained SUs)

- CA-like behavioural rules

- Behaviour genes that represent the CA-like behavioural rules.

- Property genes that represents FU properties (fluxes, energy requirements, matter transformations, physical characteristics of incoming/outgoing mass/energy fluxes, ...)

- Behaviour and property genes can be evolved using Genetic Algorithms (GA) and variants.

- Since FUs are nested, model generation can occur at any desired grain size in a bottom-up, top-down, or bidirectional fashion.

- FUs differ from living cells because each nested FU has pools of behaviour and property genes. This means that evolutionary processes can be applied at any arbitrary levels.

The MFU is described in the next section below.
The short-term memory contains all dynamic quantitative and qualitative information that characterizes the FU.
The companion SUs (if they exist) are partitioned into two classes:

- The ones that must satisfy the "central" SU in mass/energy requirements.

- The ones that are involved in the control mechanism (information transfer, information reception, transduction and command) of the "central SU".

The contained "daughter" FUs materialize the fact that an FUs is a recursive object. The nesting is achieved by including in the object the data section as a list of pointers to other contained FUs. The level of nesting is arbitrary and an FU is "atomic" when it does not contain daughter FUs. Note that the status of "centrality" is only relative since, for instance, one or more of the current FU's "companion" SUs may be the "central SU" of another FU, the latter having its own mass/energy requirements. This recursive and scale-invariant organization endows the framework with a unifying view and thus a very general character.
Note also that "mother-FUs" do not correspond to a more general OO class but to a containing structure. Thus contrary to what is usually said about object orientation, objects thus defined can capture the classical "Is-A" semantics and at the same times the "Part-Of" semantics.

**Molecular Functional Units (MFUs)**

The MFU plays a central role in self-assembly and morphogenesis since during model generation, it is through the MFUs that the FUs will self-organize and self-assemble. The MFUs are abstract particles that are "omniscient" in the following sense: since they point to their corresponding FU, and since the latter can point to parent or childs, then by transitivity a single MFU can reproduce an internal image of the entire universe. This important feature constitutes one of the cornerstones of our framework.

MFUs can. For example, represent:

- Atoms, molecules (nanotech,...)

- Subcellular organelles (cell model generation)

- Sub-cellular pathways (systems biology)

- Cells (tissue and organ model generation)

- Artifact component ( CAD, architectural design, urban planning)

- Computer programs and algorithms (self-programming agents)

- People, ants, bees (swarm intelligence, operations research)

- Mathematical functions and operators

- ...

To perform this role, the MFU is structured as a fictive "molecule" defined by:

- A pointer to the corresponding FU

- A central "atom"

- A list of secondary "atoms" (this list may be empty)

- The number and nature of secondary "atoms" are encoded in the corresponding FU's KB

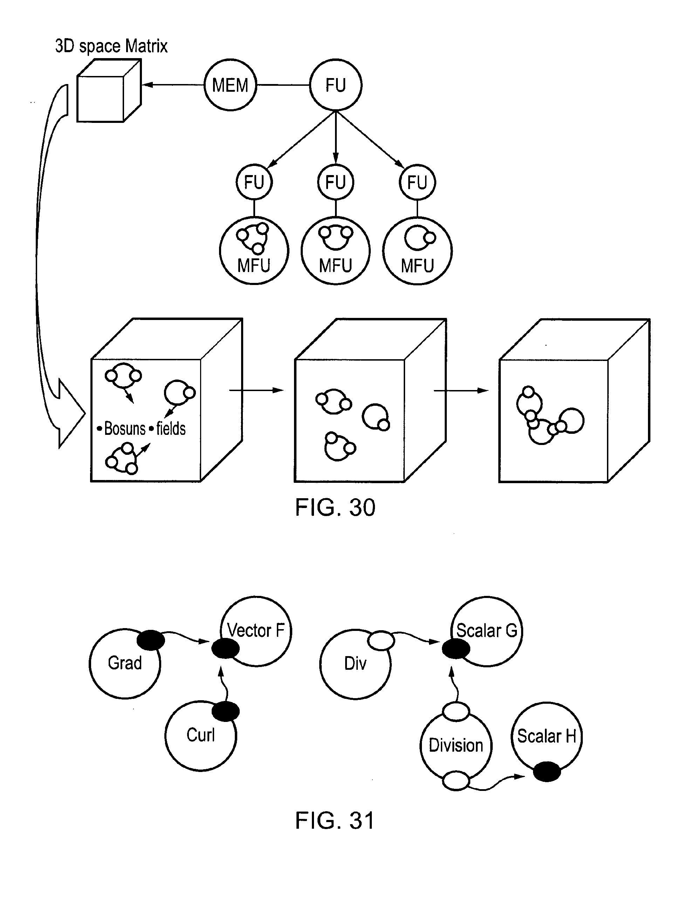

The secondary atoms "stick" to the central atom (see the MFUs in fig. 30) and are "Poles" which are sensitive to "bosons" particles, as explained further below. These secondary atoms may represent particular characteristics (physical or otherwise) of the MFU. For example:

- When the MFU represents an electron, a secondary atom (SA) pair may represent the spin;

- When the MFU represents an atom, an SA pair may represent the magnetic moment;

- When the MFU represents a molecule, an SA may represent a positively charged site, a negatively charged site or a docking site;

- When the MFU represents a sub-cellular pathway, SAs may be entry points (influx) and exit points (efflux) corresponding to specific molecular species of the pathway. The subcellular pathway may constitute a "building brick" that corresponds to a sub-network of metabolic or signalling pathways within a living cell;

- When the MFU represents a living cell, an SA may represent a cell membrane receptor, but also the cell polarity, e.g., the basolateral and luminal parts of endothelial cells' membrane;

- When the MFU represents an artifact component, the SA may represent attractive/repulsive/docking sites of/for other artifact components. Also "growth" sites of the artifact component, "up", "down",...;

- When the MFU represents a computer program or algorithm, the SA may represent entry and output ports. A program "A" will concatenate with a program "B" if its output port of "A" is conforming in terms of data type + other factors to the entry port of program "B";

- When the MFU represents people, ants, bees, etc, the SA may represent receptors of pheromones, but also "head", "feet", "tail", "up", "down",...; and

- When the MFU represents mathematical objects and operators, the SA may represent "contact" points between a mathematical objects and operators (see fig. 31).

As the skilled person will appreciate, these are a few of a great multitude of possible characteristics that might be represented for each MFU by one or more SAs.

As seen in fig. 30, the MFUs (and hence the objects, i.e. FUs, they represent) self-assemble, grow and more generally occupy a 3D space matrix until some equilibrium is reached. The 3D space matrix can either be empty space, or in a gaseous, liquid, or solid state.

Each element (or cell) of the matrix can be occupied by an unlimited number of "bosons" (a term borrowed from quantum field theory) which in a continuous "wave" model corresponds to the intensities of the corresponding fields from which gradient, divergence and other vector-fields can be derived. In a strict sense, bosons service the strong and weak nuclear forces, electromagnetic forces and gravitation. We extend this notion to chemical fields where a "boson" may represent a signalling molecule for instance (a fermion) and to any imaginary particle such as the "Nice_1" bosons which will attract people who have the "Nice_1_receptor" but may induce avoidance behaviour by those who have a "Nice_2_receptor".

To give some examples, where the MFUs (and the objects they represent) are ...

- Atoms, molecules: bosons may be photons and a space matrix element may contain the corresponding EM field intensity.

- Subcellular organelles: bosons may be chemical signals

- Sub-cellular pathways: bosons can be chemical signals but also virtual meta-chemical ones that may attract or repulse pathway "bricks" at specific entry/output nodes.

- Living cells : bosons may be chemical signals (cell chemotactism and hapotactism)

- Artifact components ( CAD, architectural design, urban planning) : bosons may be virtual particles that attract, repel, or induce growth of components and objects.

- Computer programs and algorithms (self-programming agents): bosons may be imaginary particle that attract or repel subprograms.

- People, ants, bees (swarm intelligence, operations research): bosons can be chemical signals such as pheromones but also of the "Nice" type for instance.

**Knowledge Bases**

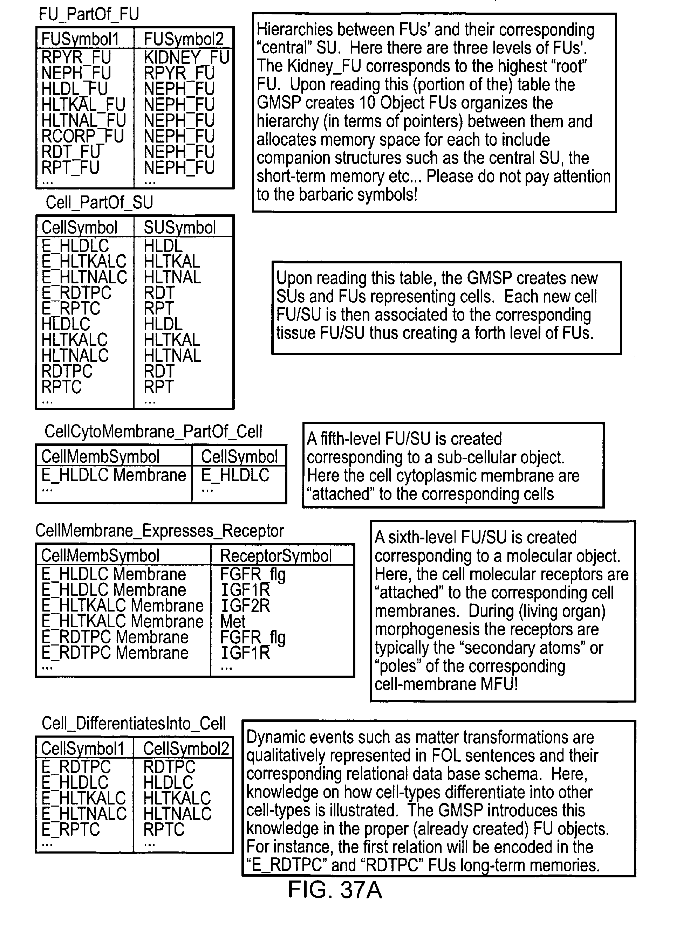

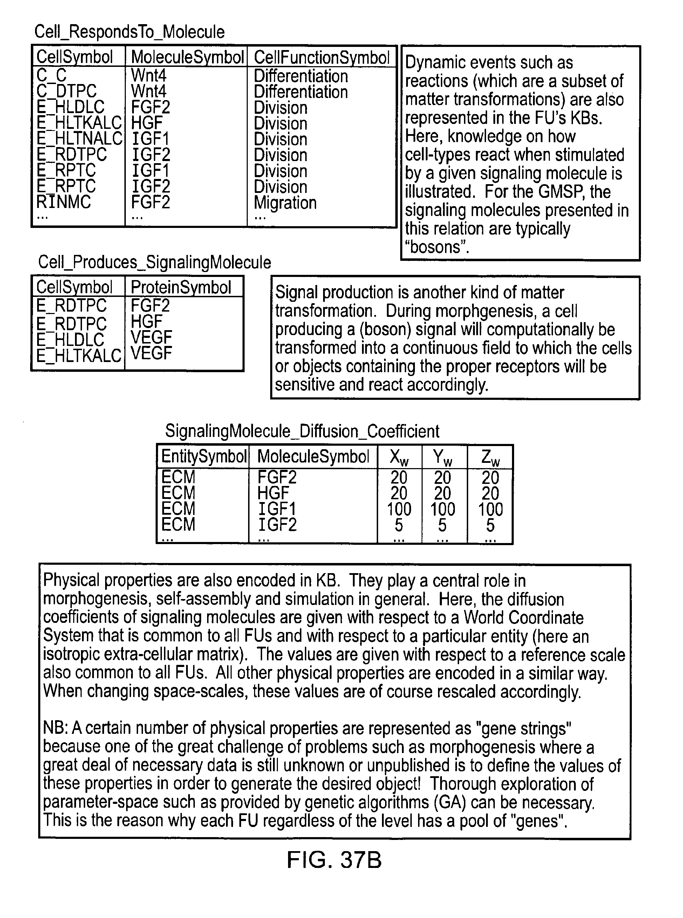

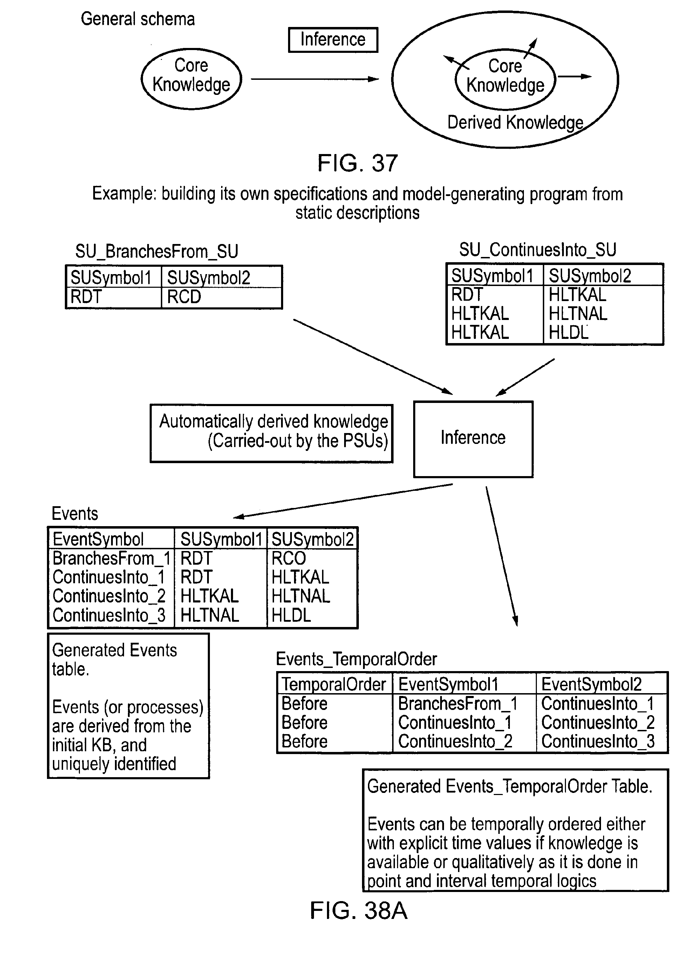

Knowledge in the KBs of the GMSP architecture can be represented using Predicate Calculus, and generally in the form of First Order Logic (FOL) and its temporal extensions. Once represented in this way, the knowledge can be encoded in relational databases. Figs. 37a and 37b shows some excerpts from examples of tables from such databases.

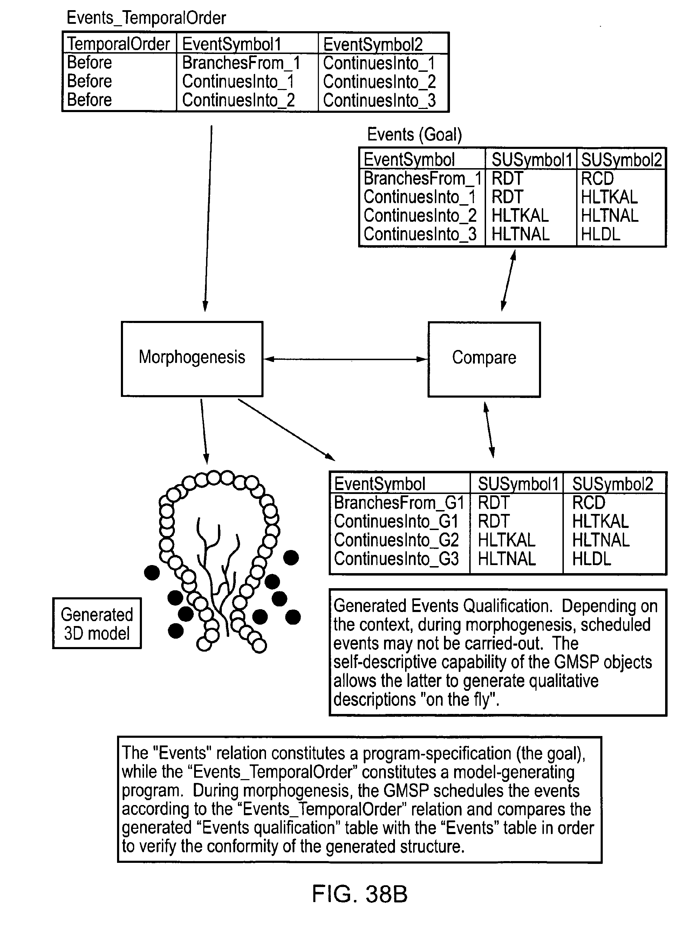

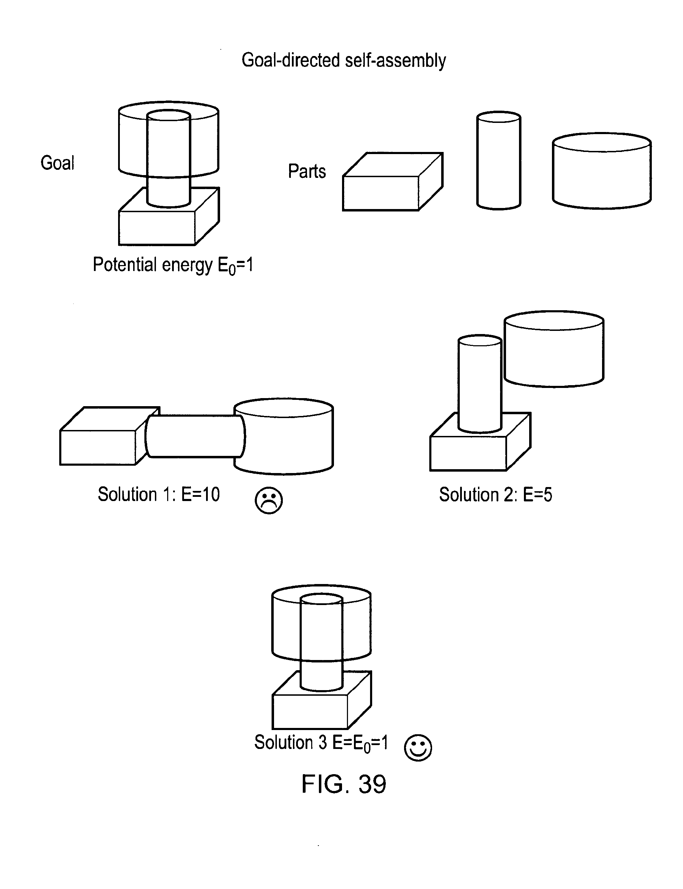

Upon writing a knowledge base it can be preferable to enter the smallest amount of core knowledge from which other information can be derived. This is one of the central concerns when building KBs: the trade-off between parsimony and completeness. Core knowledge is equivalent to the axioms of formal systems from which all theorems can be deduced. The GMSP preferably follows the same route. As an example, explicit knowledge can automatically be derived from implicit knowledge (see figs. 38 and 39).

**Physics-based simulations**

When an FU represents the physical world, the material objects associated to it have physical (mechanical, electrical, thermal,..) properties. Physical processes are also occurring such as motion, deformations, and collisions. Functional units may be moving objects that contain other moving functional units. Whatever an FU may be in terms of its subjective interpretation, it is "objectively" a material object subject to external and internal influences that reflect the occurrence of one or more physical processes. These processes include mechanical events (ME) that can be described by Hamiltonian mechanics (HM), solid and fluid mechanics (SFM) , reaction, diffusion, and advection (RDA) processes, wave propagation (WP) that include electromagnetic field propagation (EMFP), to which the SUs either are subject to or participate in.

Therefore, at least in theory, ME, RDA, and WP processes cover sufficient ground to describe the physics of FUs at all scales of interest here. Very schematically physics-based simulation can be deterministic or stochastic, adopt a discrete or continuous view of material objects. The simulation methods themselves can vary in complexity from low fidelity but computationally cheap logic-circuit types to high fidelity Finite Element Methods (FEM). Molecular-scale events are best represented by purely deterministic methods like Molecular Dynamics (MD), purely stochastic ones such as the Metropolis Monte Carlo (MMC) method, or hybrid forms. Higher level events can either adopt the discrete or continuous formulations. Discrete models for RDA include Cellular Automata (CA)[1] and variants such as Lattice Gaz Automata (LGA)[16] while FEM is the gold standard for continuous models.

In many applications including life sciences, complete RDA equations are rarely solved because simplifying assumptions are introduced. Take a continuum model of coupled RDA

$$\frac{\partial u_i}{\partial t} = f_i\left(u_1,...,u_n\right) + \nabla.(D_i \nabla u_i) + \nabla.(u_i \mathbf{v}) \qquad i = 1,...,n \qquad (1)$$

processes given by a system of PDEs of the form where $u_i$ are the n state variables, $f_i(u_1,...u_n)$ are generally non-linear functions of the $u_i$ representing a reaction term,

$$\nabla.(D_i \nabla u_i)$$

the diffusion term and

$$\nabla.(u_i \mathbf{v})$$

characterizes the advection where v is the velocity in the medium.

Many sub-cellular level biochemical network models adopt the so-called "well stirred" assumption.

Under this assumption, the advection and diffusion terms can be discarded from equation 1, yielding a system of purely reactive entities represented by a system of ODEs.

Finally, even the simplified "well stirred" continuous model can be too "rich" when experimental data such as rate constants is not available. If such is the case one can resort to Petri Nets, Boolean Networks, or Qualitative Physics models.

In the GMSP, all FUs have access to the same repository of physics-based simulators. Different FUs may adopt different simulation methods, however, for multi-scale morphogenesis, we found that there is need to have a simulation method that can be applied over all space-scales of interest.

For this purpose we have developed a hybrid discrete-continuous method where interaction fields are considered as both continuous waves and discrete information particles. With this method, each point in space is associated to N "bosons" particles that service "classical" electric, magnetic, or mechanical force fields, as well as chemical-gradient induced force fields. In addition, imaginary "artifact" morphogenetic fields of an infinite variety can be constructed for the purpose of the morphogenesis and self-assembly of artifacts and computer programs (see discussion of "non-biological applications" further below)

The "particles" that self-organize are the MFUs described in the previous sections. They scan the surrounding fields to which they are sensitive and experience the corresponding (summed) forces as any charged material particle would when subject to gravitation and an electric field. The fields' amplitude at each point in space is computed by the continuous field equations of the RDA family or by simplified versions thereof.

With this approach molecular motion induced by physical forces, living cell motion driven by chemical gradients, or the "molecular" companion of a piece of copper-wire "attracted" to a "molecular" companion of an incomplete copper coil of the same diameter and the same brand can be modelled within the same computational framework.

A concrete problem related to multi-scale modelling is the "magnification" of structures or regions of space of interest. Once the structures to magnify are selected, the GMPS (i) rescales the model parameters in terms of the new spatial and temporal units (e.g. for RDA equations they are the diffusion coefficients), (ii) expends the structures in the expanded matrix, and (iii) smoothes the surface of the solid by transforming the solid into a B-Spline-type surface object before reverting to a new smoothed solid.

The magnification process is mandatory during the morphogenesis of a developing organ since in the morphogenesis of organs the largest structures are first developed before increasingly finer ones are generated. Our simulation of morphogenesis follows this constructive scheme starting from the largest SUs to finer ones as the structure grows. The generation of the multi-scale kidney model depicted in figures 4-12 in the appendix illustrates the process and is described further below.

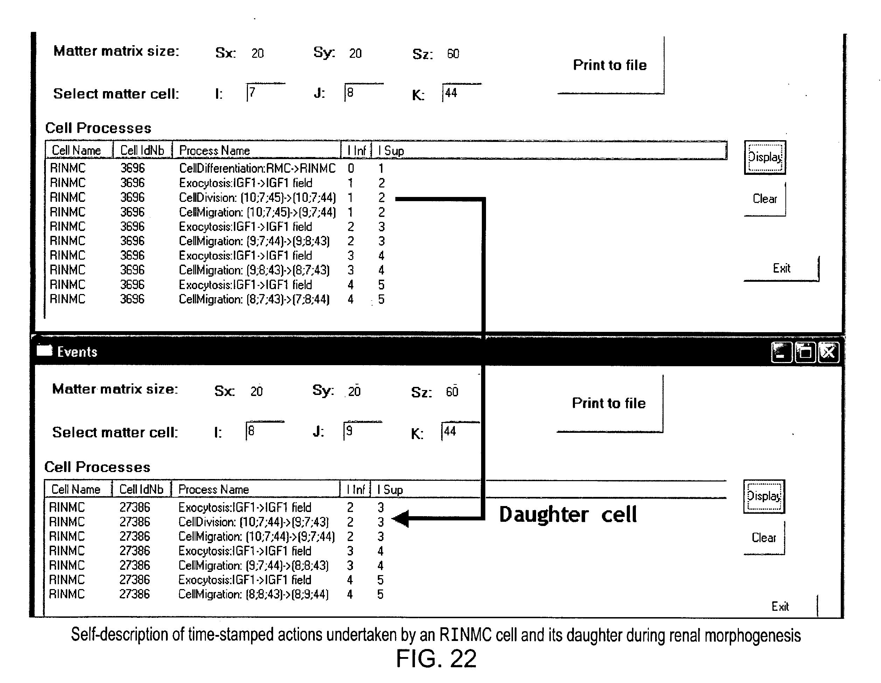

In addition to quantitative computation, during a simulation, each active FU can produce a succession of events descriptions which are time-stamped using temporal FOL representations [2][5]. Since FUs can be nested, visual and textual scenarios within scenarios can also be constructed. Hence, each FU is statically and dynamically self-descriptive (see fig. 22).

## Morphogenesis-based model generation

Material objects like an organ, a man-made device or a stone have generally simple envelopes (outer boundaries). On the other hand, as we "zoom in" and change space-scales their internal structures become highly complex and intricate. Solving the previously defined physics-based equations requires shape information at all levels of detail before setting the boundary conditions across each interface (e.g. flux or no-flux across for some quantity boundaries). Thus an important part of multi-scale modelling lies in producing realistic multi-scale 3D morphologies, boundary conditions and anisotropic properties of the system under study.

This problem is particularly true when modelling living organisms. Understanding the morphogenesis of tissues and organs from a single cell is to open the window to Nature's secret of generating forms of tremendous complexity and intricacy from an egg-shaped structure. Despite this complexity, fundamental research in developmental biology seem to confirm that morphogenesis results from coordinated cell behaviour such as signalling motion and aggregation, division, differentiation and apoptosis [10]. The point is that a limited set of events and agents are responsible for the infinite variety of patterns in living systems. The process is initiated by inductor cells and coordination is mediated by short-range direct cell-cell and cell-extra cellular matrix interactions as well as medium to long-range interactions mediated by chemical and electrical morphogenetic fields. It is the spatio-temporal organization of these interactions that determine the final structure.

These coordinated actions are dependent on knowledge concerning cell populations, the fields they generate, the fields to which they are sensitive and the initial and boundary conditions. To capture this knowledge, each FU of a given class has access to the following information:

- Cell-types: stem cells, inductor, differentiated cells and the temporal order of differentiation.

- The (electrical, chemical) fields generated by each cell-type

- The fields to which each cell-type is sensitive and the sensitivity factor.

- The field's diffusion coefficients.

- Formal descriptions of supra-cellular components, matter/energy requirements and control structures.

The initial conditions include the following:

- Cell-types: stem, inductor, differentiated cells and the order of differentiation.

- The location and number of inductor-cells and stem cells.

- The initial embryonic structural unit made (usually of one or a few stem cells).

- The initial inductor fields.

- The fictive MFU molecules mentioned in the "Functional Units" section that are representative of the current cell-types

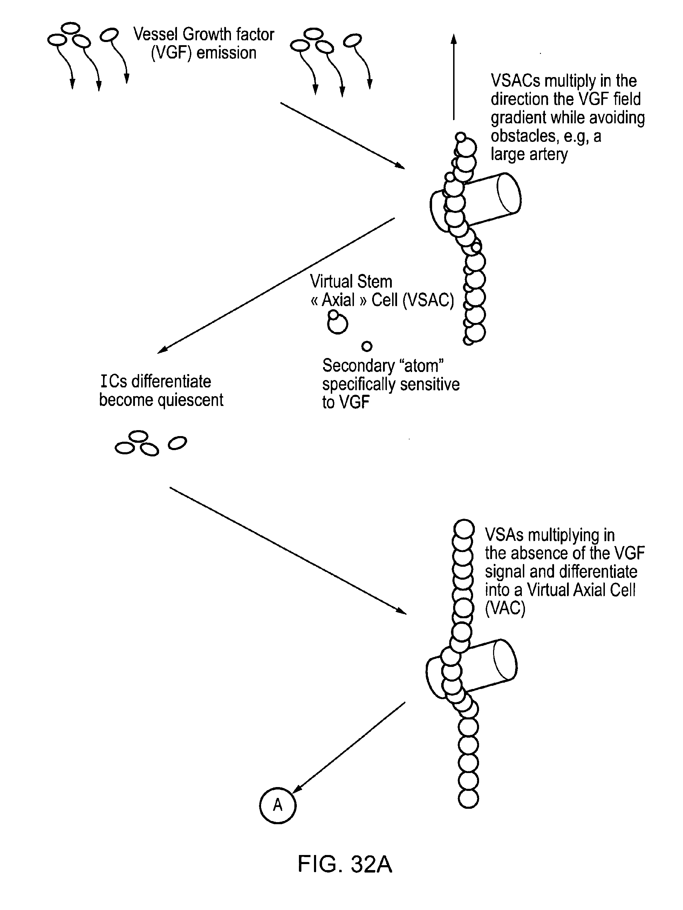

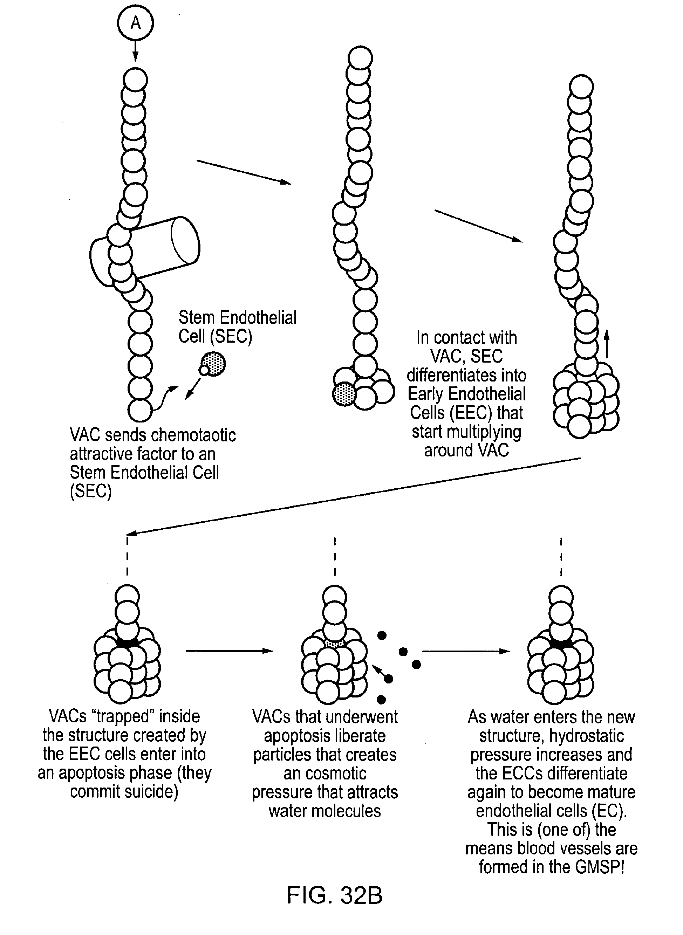

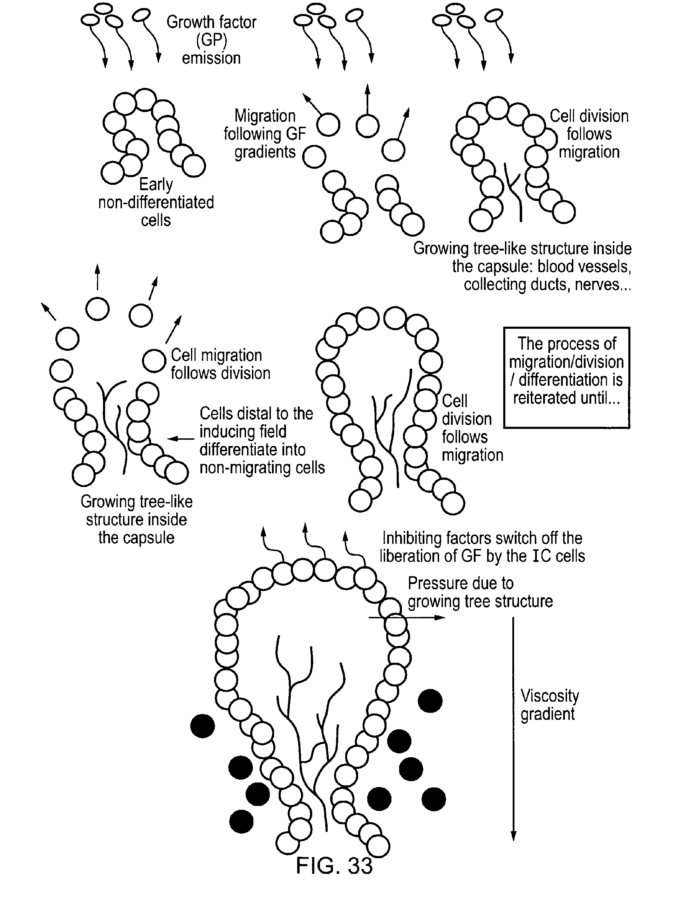

The cells and field data is encoded in the KB that is shared amongst all FUs of the same class while the initial conditions are written in each FU's short-term memory. The morphogenesis of a single SU is carried out by the representative MFU molecules mentioned in the "Functional Units" section above, and involves the following steps (see figs. 32a, 32b and 33):

1. The main axis of the SU is morphogenetically grown first using the fictive MFU. They create potential field barriers around them akin to the Leonard-Jones type in molecular dynamics to prevent other fictive MFUs or "real" cells to penetrate their "intimate" space. The concept of axis applies also to egg-shaped or even to perfectly circular object. In the latter cases, the "axis" is, respectively, the major inertia component and the diameter (figs. 32a and 33).

2. Once the axis is created, MFUs will emit an attractive field for the cell-types they represent (figs. 32b and 33).

3. The actual "cells" will converge and aggregate around the potential field barrier. Different cell-types can aggregate and a multi-cellular tissue of distinct cell-types can be formed. Another simpler route is by curve-sweeping the axis as proposed in our previous patent [38].

4. Once the MFUs have formed a closed-circuit or formed the tip of a structure they go into an apoptosis phase and self-destruct. But before doing so, they send "information" particles of a special kind that change the "neutral" elements of the new structure's interior into material elements such as water molecules. The content of the "information" particles is accessible to each MFU since they are "omniscient" and can have access to information at any level via their companion FUs (figs. 32b and 33).

One important aspect of the process described here for growing tube-like structures is the concept of an "axial cell", such as the Virtual Stem 'Axial' Cell (VSAC) shown in fig. 32a. These cells are imaginary (in the sense that they have no real world analogue) but without them the morphogenesis of a tube-like hollow structure would require much greater computing 'effort' (i.e. time, processing power, etc), perhaps as much as a factor of 1000 or more.

The agents referred to in the figures (growth factors, cells, etc) are represented in the model either by 'bosons' and their corresponding fields or MFUs interacting in the corresponding FUs 3D space matrix (see above). The processes are therefore scale-invariant and the "omniscient" nature if the MFUs allows them to self-organize optimally.

Knowledge about the agents ( growth factors, cells, ...), their properties (conditions for multiplication,..), and states (differentiation phase,...), is stored in the corresponding FUs long term memory. Some of these properties and states are encoded into the FU's genome. By using Genetic Algorithms techniques (and variants) FU's can evolve. Hence real data such as the proper diffusion coefficients of growth factors can be elucidated and unknown growth factors be hypothesized and experimentally confirmed.

In the case of non-tubular structures, the general shape can result from the interplay between inducing signal gradients, pressure due to internally growing structures such as vessels, and viscosity gradients of the surrounding medium. Again, all this information is stored in the FUs KB and constitute the starting point of morphogenesis carried-out by MFUs.

"Capsule-like" morphogenesis and "tubular" morphogenesis that produce tree-like structures can operate in synchrony in a growing organ. The GMPS can do both as seen in the kidney model example below.

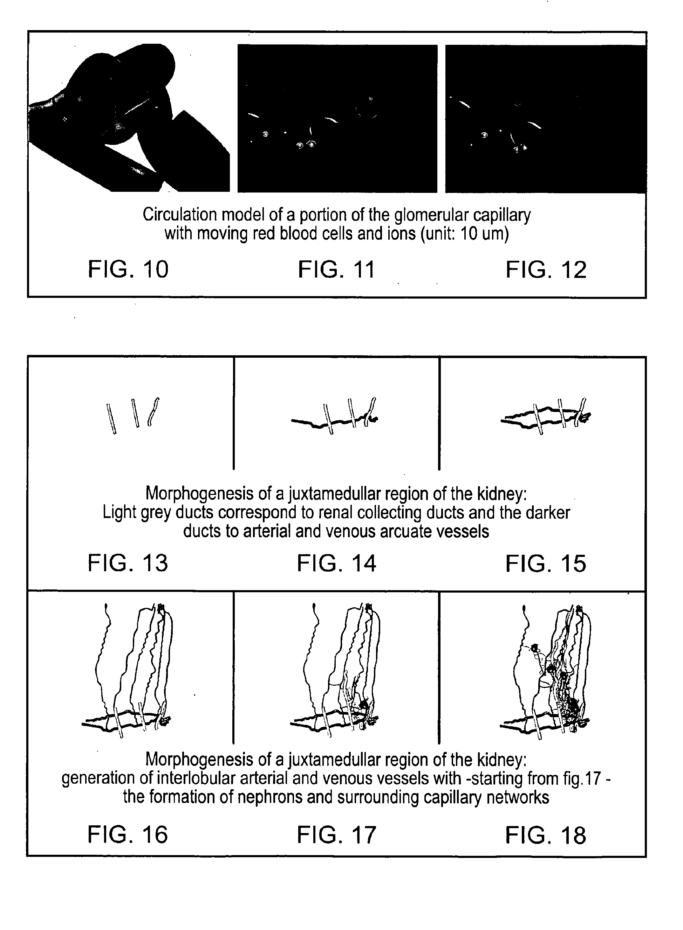

The mixed discrete-continuous method described in the previous section with its "omniscient" representative MFU molecules is applied to carry-out the load. The formation of nerves, vessels, "tubes" and "sacs" of all sorts, their boundaries and the nature of their interiors can thus be formed following the same morphogenetic principles. At the end of the morphogenetic process a complete functional tissue is created and physics-based simulators, including the discrete-continuous model, can be used to simulate the processes that occur in the newly formed functional unit. For example, Figs 10 to 12 (referred to further below) illustrate instantaneous "snap-shots" of laminar blood flow in a portion of a generated glomerular capillary within the simulation.

Even a very partial understanding (and modelling) of morphogenesis seems to be sufficient to generate the most salient morphologic and functional features of a complex organ structures such as the juxta-medullar portion of the kidney illustrated in figs. 13 to 21.

Our prototype version of the GMSP has grown a kidney (the example referred to herein), a partial lung and myocardial tissue from virtual stem cells. What led to the different models was the content of the knowledge-base (e.g. cell types) as well as the initial and boundary conditions. The general FU hierarchical structure and KB organization remained unchanged.

Morphogenesis can also be extended to artifact design; i.e. instead of vessel growth, the same method could be applied to "grow" electric copper wires with their surrounding insulators, or water duct conduits, for example.

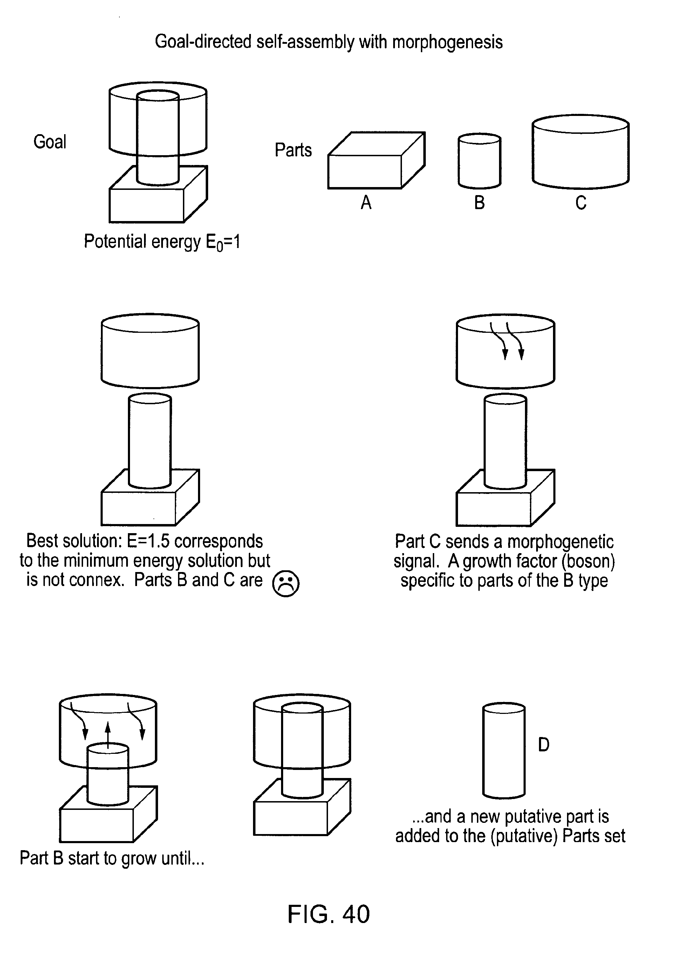

Figs. 39 and 40 illustrate the general concepts of self assembly, contrasting 'pure' goal- directed self assembly (fig. 39) with goal-directed self-assembly with morphogenesis (fig. 40), in accordance with embodiments of the present invention. The greater computational efficiency of the approach involving morphogenesis is clear to see.

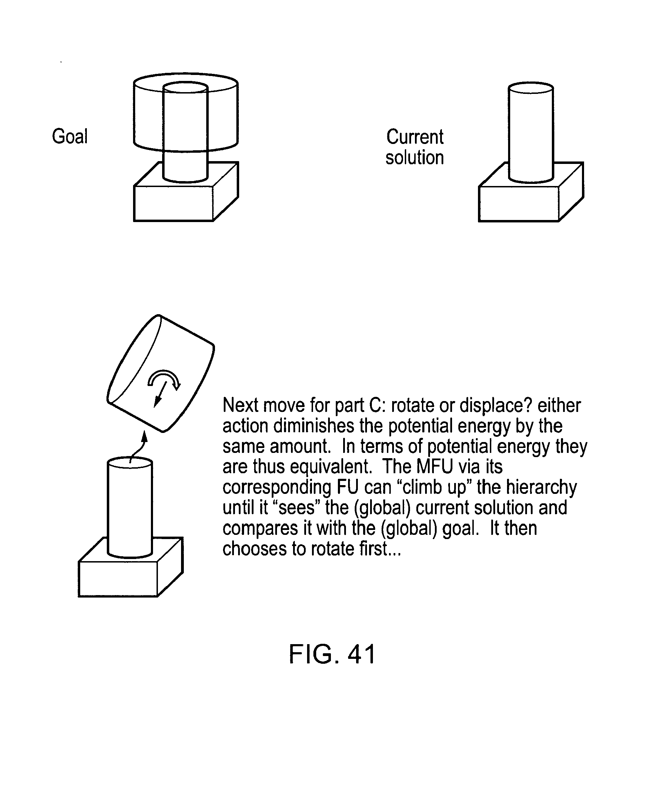

Fig. 41 illustrates the benefits of the MFUs of the GMSP architecture being "omniscient" (i.e. able to 'see' multiple (all) levels of the hierarchy).

**Agents - Problem Solving Units**

A (computing) agent is a computer system that emulates and extends the cell metaphor by sensing, and reacting to their environment (reactivity), may take anticipatory actions (proactivity) and interact with other agents (sociability) to achieve goals.

The FUs of the GMSP are reactive and socialize via their representative MFU. On the other hand they are not proactive. Hence the major difference with an FU and an agent as defined here lies in the lack of true cognitive ability.

Since there are no pro-active and plan-generating living cells then morphogenesis-based modelling of living tissue should indeed be "blind". However, today's knowledge on how genes interact with epigenetic processes is incomplete and until then some "weak" constraints need to be introduced.

For instance, if we want to "grow" a virtual model of a normally built human, then the final product must, among other things, satisfy the constraint (NbofArms=2) && (NbofLegs=2). Such constraints do not reduce the generality of the method since quite a few different individuals can satisfy this description.

Cognitive ability is introduced in the GMSP as follows. Each FU is assigned one or more companion Problem Solving Units (PSU). A PSU is a specialized meta-level agent whose role is to discuss and reason about the FU, i.e., the FU constitutes the object-level. What a PSU does is totally determined by its intended role. Like FUs they are characterized by functional, teleological and behavioural knowledge of the abstract cognitive type. A PSU is a self-descriptive model of cognitive features.

PSU functional knowledge may relate to, but is not limited to, any one or more of the following:

- The production of domain-specific queries. These queries can be issued to other agents, a human operator or on the internet.

- Answering queries

- The production of operational knowledge from "first principles" models

- Selecting and tailoring physics-based simulation methods

- Designing FU-specific optimization tools

- Designing FU-specific control systems

- Diagnostic/trouble-shooting

- Virtual object manipulation (e.g. translation, rotation,..)

- Distance training

Structural knowledge relates to "quantum" Inference Engines (IE), e.g.:

- Deduction (classical logic's modus ponens)

- Generalization/specification

- Inductive reasoning

- Temporal reasoning [2][5]

- Spatial reasoning [9]

- Fuzzy inference

- Bayesian inference

- Qualitative pattern matching methods

- Rule-based heuristics

- Goal-directed search methods

- Oratorical and argumentative techniques [34]

- Statistical data analysis techniques

- Formal representation transformations (FRT)

These elementary IEs can form composite IEs and Problem-solving Methods (PSM):

- Abductive reasoning (hypothetico-deductive reasoning) [6][32]

- Analogical reasoning [13]

- Case-based reasoning [47]

- Optimization methods
  Teleological knowledge relates IEs to function. For instance, the production of operational knowledge from "first principles" can be developed from heuristics and optimization, the production of domain-specific queries from heuristics and FRT, and trouble-shooting will use abductive reasoning.
  In addition a PSU

- Can have access to FUs KB via a pointer.

- Draws its quantum IEs from a single pool shared amongst all PSUs. This is equivalent to the common pooling of physics-based simulators for the FUs.

- Like all agents, has internal states, goals, plans, either acts on the world or on itself and communicates with other PSUs. The fact that they can act on themselves means that they can self-organize.

Thus, the GMSP has two isomorphic and parallel worlds: the world of (nested) dynamical systems and the world of (nested) agents that perceive and act on the (nested) dynamical systems and on themselves.
The term "perception" covers all the subjective views of the system under study, i.e., the cognitive level exploit specific domain ontologies.
The GMSPs fractal-like cognitive structure has similarities with that of the mammalian brain. In the latter, each neuron is assorted with companion cells such as glia and astrocytes. Each (or most of) neurons form short-range positive and negative recurrent-loops with nearby neurons. These small groups of neurons are organized into columns that are perpendicular to the cortex's surface. Columns also communicate with nearby columns via positive and negative feedback loops. And finally, neighbour columns are organized into macro-columns with short-range and long rang-associations with other macro-columns.
With this architecture, local specificities and goals are accounted-for as much as the global picture and goals. Problem-solving becomes as much a cross-talk between FUs in the (virtual) world as it is between their companion PSUs that talk about, and act upon, the world.
To summarize, a PSU has the following components:

- Input/output communication ports.

- An input transduction mechanism

- A pointer to the companion FU.

- A short-term memory

- A local KB

- A pointer to a descriptive KB common to all PSUs

- A pointer to the mother PSU (if the current PSU is nested).

- A list of pointers to "sister" PSUs.

- A list of pointers "daughter" PSUs.

The descriptive KB includes

• PSU teleological, structural and functional knowledge encoded in FOL (and extensions)
• A genome: Problem-solving (PS) genes that codes for each IEs and how they are combined.
• PS genes can be evolved using Genetic Algorithms (GA) and variants.
• Since PSUs are nested, problem-solving can occur at any desired grain size in a bottom-up, top-down, or bidirectional fashion.
• This means that evolutionary processes can take place at any arbitrary levels.

The short-term memory includes

- The PSUs goals

- A plan

- Needs

- The PSUs psychological state (waiting, satisfied, not satisfied,...).

- A cost function

- A log-book of all undertaken actions

An action either acts on the world or on the cognitive structure itself.
The local KB includes

- IE and PSM compositions application rules

- Cases of IE and PSM compositions in problem-solving situations local to the PSU

The Genome codes the IE and PSM compositions application rules. By this means, diversity and evolution is possible since for each PSU its "genes" that can be mutated and evolved.
In the GMSP, during problem-solving each PSU will follow the same pattern:

- Local goals and constraints are evaluated as functions of the immediate mother PSUs goals and constraints

- Needs are evaluated as a function of the daughter PSUs' needs as well as its own needs and percolated to the mother PSU

- Duration-estimates are evaluated as a function of the daughter PSUs' and the duration-estimate of its own actions and percolated to the mother PSU

- Costs-estimates are evaluated as a function of the daughter PSUs' and its own needs and percolated to the mother PSU

- Partial solutions are gathered from the daughters and assembled into a local feasible solutions (that satisfy the local goals). Local feasible solutions are percolated upward to the mother PSU.

- Actual durations and costs are computed as a function of the daughters' partial solutions as well as the cost of combining them into feasible local solutions. Actual durations and costs are percolated upwards.

- In certain cases negotiations are carried-out with sister PSU(s).

At each level of nesting, all sister PSUs receive the same goal from the mother. Each (sister) interprets via its transduction mechanism the mother goal into its own goals. For the most global PSU (the "root mother"), the needs are addressed to, and satisfied from, the environment.

Solutions between sister PSUs may be conflicting with respect to the mother goal hence negotiations must take place in order to arrive at combinations that will satisfy the mother's goals. Depending on the problem at hand the sister PSUs' conflict-resolution may occur during goal planning or once feasible solutions are produced by each. In both cases, the combined solution must satisfy the mother goal.

Posterior to negotiating, each PSUs "psychological state" will depend on a number of factors

- The satisfaction of its own local goals and needs

- The cost and time taken to carry-out its goals

- The nature of the collaboration that range from unselfish to totally self centered.

From the technical standpoint it is worth noting that the multi-agent systems paradigm is relatively new and there are currently no off-the-shelf, well-tested development tools and techniques available. Languages for agent-oriented programming and standardized communication protocols for heterogeneous distributed agents need to mature. In this respect, object-orientation is a mature technology that lends itself well to agent representation although today agents are usually defined in declarative form.

Technically, the GMSP platform is not an agent-oriented programming environment but communication issues have been circumvented since all PSUs have the same internal organization and communication structures. This is also true for representational issues since they combine declarative knowledge and self-description in terms of FOL (and its temporal extensions) while being C++ objects.

## Optimisation (& other computational features)

Optimization problems are ubiquitous in design, control processes, and organizational tasks. Dynamic systems can be represented by mathematical models that relate parameters, control variables, and state variables that highlight system features that we want to study. Many optimization techniques involve tuning the parameters and control variable in order to arrive at some desired behaviour of the model. The tuning must be such that parameters and variables satisfy a certain number of constraints. And the goal of optimization is to reach some optimum that is defined by the so-called objective functions. Optimality criteria are problem-dependant as are the objective functions.

Optimizations methods fall into two classes: Exact methods and Metaheuristics. Exact methods include dynamic programming, linear and integer programming, Branch-and-Bound, all sorts of "hill climbers" such as the gradient-based Levenberg-Marquardt and conjugate-gradient methods. Metaheuristics include, among others, simulated annealing, genetic algorithms, memetic algorithms, tabu search, ant algorithms and other "swarm intelligence" approaches [14, 15, 17, 24, 25, 33, 43].

There are two problems related to classical exact optimization methods: (1) When the number of variables or parameters reach the thousands and beyond, they are computationally inefficient; (2) they usually converge towards a local optimum.

Pseudo-random methods such as Simulated annealing (SA) and Genetic algorithms (GA) were developed as an answer to these limitations.

SA methods avoid local optima by introducing a random component due to "temperature" that allows solutions to "creep-out" from local optima and further explore the search space.

Genetic algorithms are search methods inspired by biological evolution combine efficient and robust computation that minimize the assumptions about the search space landscape such as derivability and thus discard gradient computations altogether. They also avoid local optima by exploring the search space with a population of solutions instead of a single solution. The population is evolved at each generation using selection, crossover, and mutation operators. The strong point of GA is also its weak point. The few assumptions needed on the search space to run a GA make the method very general. The search however is blind and can be very time-consuming.

Moreover, in most optimization tasks it is usually advantageous, even necessary, to exploit all available knowledge that may improve the search. This view has been popularized by the so-called No-Free-Lunch Theorem: "a search algorithm strictly performs in accordance with the amount and quality of the problem knowledge they incorporate". Memetic Algorithms (MA) materialize the "No-Free-Lunch Theorem" by combining domain knowledge with generic evolutionary ideas.

Current research in combinatorial optimization focuses on merging exact methods with metaheuristics [33]. Two main categories can be distinguished. Collaborative Combinations: The algorithms collaborate but are not part of each other. They are a single-level combinations of metaheuristics and exact techniques. Exact and heuristic algorithms may be executed sequentially, intertwined or in parallel. In sequential execution either the exact method is executed before the metaheuristic, or vice-versa. The intertwined or in parallel approach consist of peer-topeer combinations of exact/heuristic techniques with asynchronous parallelism. Integrative Combinations: One technique is an embedded component of the other technique. Either the exact method is the master algorithm and the metaheuristic the slave, or vice-versa. A common approach is to use the multiplicity of solutions provided by the metaheuristics and the efficiency of the exact methods for the local search task. In our framework, at each level and for each FU, the PSU can be tailored to adopt collaborative or integrative combinations of exact methods and meta-heuristics.

The GMSP's architecture allows two address two different issues related to optimization:

- Automated-design of the optimization structure (PSUs meta-heuristics)

- Optimization per se. (FU exact, heuristic or mixed)

Both relate of course to a specific PSU and its associated FU.

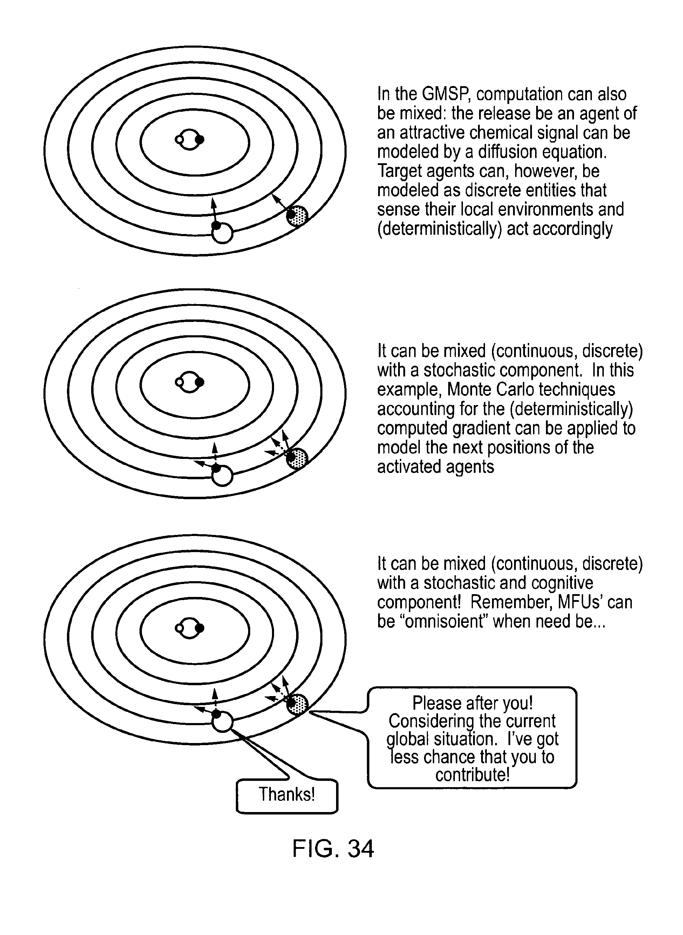

Computation in the GMSP can be carried-out by a discrete deterministic models (e.g. CA) or continuous deterministic ones (e.g. a PDE such as the diffusion equation). Computation can also be mixed, as illustrated in fig. 34.

The design of the optimization structure is an iterative process that is co-occurring with optimization itself. As mentioned, the optimization structure is domain-dependent (what do we want to optimize?). Optimizing an energy-producing reactor will be different from optimizing the energy distribution or the routing of data streams on the internet. However, all three are dependent onto the physical nature and properties of the "thing" that does the job. Thus during the design phase of the optimization structure, a PSU will use both its knowledge about optimization in general and the properties of the physical object described in the companion FU in order to self-organize its own optimization structure.

Because of its architecture, our framework can employ metaheuristics of the GA family as well as the "swarm intelligence" family.

For instance, in a self-assembly process using the GA family, each gene position in a "chromosome" may represent a class of object (a Structural Unit Class) and each instance of a gene an instance of the class (a particular SU). With this interpretation a "chromosome" will correspond to a self-assembled object corresponding to the mother SU. Standard GA family algorithms can be applied to evolve the solutions.

In the "swarm intelligence" approach, the companion MSUs are in motion within the mother SU molecular 3D space matrix. They may be communicating with each-other via different fields as exposed in the preceding sections. Self-assembly with this approach is achieved by effective binding in the molecular space 3D space matrix.

An important advantage of the GMSP lies in the fact that natural and artificial complex systems reach global optimum by self-regulating optimally and sub-optimally at all hierarchical levels.

Optimality cannot be viewed at a single hierarchical level, and even less in terms a single FU but at the whole system level. In some instances a sub-level can only operate sub-optimally with respect to some criterion in order for the system to reach global optimality. With its nested FU and associated nested PSU, the GMSP provides a framework to elucidate this problem for any given case.

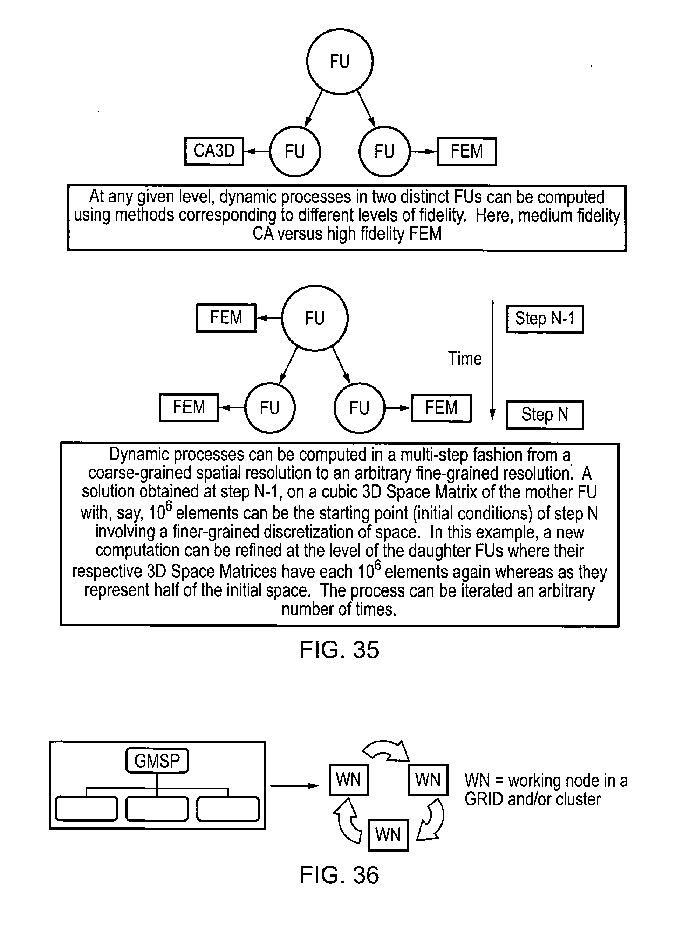

Another important issue is computational efficiency. We believe that optimization of large-scale systems can only be carried-out by a top-down multi-staged process. Global satisfaction and optimality can first be computed at the highest level FU (root-FU) and its companion PSU using a coarse-grain model. Once an acceptable solution is attained, the finer-grained level 2 model may be used. The controlled global variables of the root-FU can be decomposed into variables of the daughter-FUs the values of which must be adjusted to "fit" the global variables. This iterative process can be pursued down to any desired level of precision. This hierarchical approach can tremendously reduce the computational complexity in comparison of the classical "flat" approaches to optimization where all the variables are on the same level. See fig. 35 for examples of such multi-level computational concepts.

The GMSP's architecture also lends itself to parallel computing and multi-threading in synchronous and asynchronous modes on dedicated clusters and GRIDs (fig. 36).

**Example**

Reference is made here to figures 1 to 21 and 22. These figures illustrate one currently preferred field of application of the concepts described herein, namely modelling (i.e. model generation and subsequent simulation) of biological systems such as the human body and its component organs. The particular focus of this example is the development of a multi-scale computer model of a human kidney.

Figs. 1 to 3 illustrate a model of the human body, organ models within the envelope of the body, and more specifically the kidney model within the body envelope respectively. The focus of this example if the kidney model.

Figs. 4 to 9 show the multi-scale nature of the model, illustrating exemplary component models that are nested within one another in the overall kidney model.

Figs. 10 to 12 illustrate the simulation of blood flow within a portion of a capillary in the model.

Figs. 13 to 21 illustrate the 'growth' of the juxtamedullar region of the kidney model through a morphogenesis-based approach.

Fig. 22 show data describing the state of an FU (in this case an RINMC cell) and its 'daughter' during a simulation.

## Potential Fields of Application of the GMSP Architecture - Background

The following discussion is included to identify some specific fields in which it is thought that the GMSP architecture might offer significant benefits over the more conventional technologies applied in these areas. These fields are illustrative and not exhaustive.

## Multi-scale 'virtual human' applications

### *Drug Discovery*

A good place to start is to cite an excerpt from the EEC white paper [3]:"*Consequently, an optimal measurement of in vivo data, needs dedicated "data formation models" coupling virtual physical waves propagation models (US, MRI, X-Rays, TEP) with virtual human models including anatomy (complex 3D deformable moving shapes), tissue properties and as far* as *possible physiology (from the molecular level to the organ). Such models would help to provide virtual reference data bases including both the human tissue properties and the possible physical means to measure it.*"

In the US Patent [21], the authors propose a method to calibrate standard (parametrizable) models using experimental data. There are four main phases: (i) the selection of standard (parametrizable) model in a model repository, (ii) the estimation of the (selected) model parameters (iii) scoring the fitness of the calibrated model and (iv) propose new experimental protocols for separating competing calibrated models using statistical methods. The authors propose a heuristic approach to a multiple model calibration problem. The heuristic lies in the selection of one or more candidate standard models that are then calibrated, by applying standard system identification methods.

In the US Patent [23], the authors propose a component-based architecture where the GUI is located in one computer and the simulation engine in another. The simulation engine may have different components that include an ODE solver, a Solver Factory, and a Model Factory. Their invention is technological and related to interoperability issues. For instance the invention allows putting together different software components that each simulates an aspect of a biological system.

In the US patent [35], the authors propose a method of using "overlays" to manipulate and store models of biological and/or physiological systems. An overlay describes what differentiates a computational model from another. The difference can cover initial conditions, boundary conditions and the type of equation (e.g. ODE vs. PDE vs. algebraic) that underlie the assumptions made about the system being modelled. They then propose efficient storage and retrieval methods using the overlay concept. For instance a memory-saving strategy would be to store a model A and an overlay that corresponds to the difference between the model A and a model B, instead of storing both models.

The US patent [45] describes a detailed and accurate multi-scale 3D heart model.

System identification, efficient manipulation and storage of models, parallelizing computing using components on different processors and modelling itself constitute challenges in themselves (especially modelling). They do not however respond to the need of having large virtual reference data bases. Referring to [21] a calibrated model is in a sense a "new" model, but what distinguishes two humans cannot be reduced to a difference in parameter values of an otherwise "standard" human. The real question is to account for the huge anatomical variabilities of, say, a single organ in terms of size, number of sub-components and shapes, number of vessels and shapes, the way they branch and so forth. For instance, a "normal" kidney will filter 700ml of blood plasma per minute. There are a quasi-infinite variety of "normal" kidneys that will satisfy this description. We therefore argue that the only means to develop realistic virtual reference data bases in a statistically valid number is through a morphogenesis-based framework that incorporates (i) randomness in the generating process, (ii) structural/functional references at all levels of the hierarchy, (iii) fitness scoring functions to evaluate the generated structural/functional models at all levels of the hierarchy.

Only then could we then produce perhaps a thousand parametrizable "standard models". Parametrizable computer models of integrative physiology will allow to carry-out realistic in silico studies of the actions of a putative drug on the entire organism.

There are two opposite problems related to in silico drug discovery.

• The "classical" approach starts with a compound developed by combinatorial chemistry departments and attempts to determine if the compound is a serious drug candidate.

- The "inverse" approach which, to the best of our knowledge, as never been developed is to start with a disease where structural/functional and genetic data may in part be available, build several computational models that explain the available data, establish the variables that, when properly tuned, will result in normal model behaviour, and then analyze the corresponding cells and cell receptors that could be candidate drug targets by combining the computational model and all the "omics" data bases. Although still a "dream" this would be the ultimate solution to rational drug design. Indeed, we would depart from the blind search of combinatorial chemistry to a situation where candidate drugs' structure/properties/function would be defined beforehand, their putative cell and sub-cellular targets identified, and possible benefits and side-effects would be predicted using realistic Absorption, Distribution, Metabolism, Elimination (ADME) models.

In the "classical" approach a compound is defined in terms of its constituent atoms, 3D shapes, and physico-chemical properties such as fusion-point, solubility, or lipophilicity. If knowledge about the 3D structures of cell receptors is known, then molecular docking techniques between the compound and receptors can be applied to test the geometrical "fitness" between the two. At the other hand of the spectrum in terms of space-scales, in silico pre-screening of putative drugs consists of predicting the ADME using Pharmacokinetics-Pharmacodynamics (PKPD) models. These PKPD models represent the body in terms of grossly defined multiple compartments (e.g. the gut), each of which is considered as a "well stirred" isotropic and homogeneous medium [29][36] which, in the general case, is an unrealistic assumption. In between, there are cell models of metabolic and signaling pathways that are represented by Boolean networks, Petri nets, or systems of ODE. Today's assessment on the state of the art recognizes the fact that we need to develop fully integrated models as proposed in the 7th European Initiative.

This issue is a fortiori true for the "reverse-engineer" putative drugs. Solving the multi-scale inverse problem is beyond reach today. However, a possible future route would be to proceed by stages: Solve the inverse problem using bulk disease models like current PKPD ones. Use the estimated "abnormal" values as input to more detailed model (e.g. more compartments but all "well stirred"), proceed as far as the complexity of the models allow. Use sensitivity-analysis techniques to test the robustness of the solutions at each stage.

*Medical Ima4inq and Medical Devices*

In the US Patent [18], the authors describe a method that correlates biological states to large scale biological and imaging data. The objective is to establish traits from the data that are highly specific of given biological state prior, during and after a treatment. If such traits can be found, then disease prognosis, drug prediction on efficacy and possible adverse effects on new patients can be carried-out. This invention is complementary to the development of a Virtual Human (VH).

With a VH, what needs to be done is to model the interactions between signal producing devices and the body that can be summarized by the following generic term: "Body-Device Interactions" (BDI).

There are at least four main questions/goals related to BDI: (1) Given a physical model of the body, how do ultra-sounds (US), MRI, X-Rays and TEP "waves" propagate? (2) Given a "standard" Virtual Human, how to create virtual reference databases that cover all the varieties of human morphology and anatomo-pathologies?, (3) Given that we know how generated biosignals propagate in the tissues, what means could we develop to measure them? (4) Given "dysfunctioning" Virtual Humans, how can we design medical devices that may correct the dysfunction in the most non-invasive way?

The first question falls into the class of the so-called Forward Problems. Since tissues are inherently inhomogeneous and anisotropic with respect to many "waves", precisely modelling the highly complex structure of tissues is the most important issue to solve the Forward Problems. Once the interfaces that separate internal regions have been defined, the anisotropy with respect to a particular wave can be computed integrating in the modelling chain methods such as outlined in our previous patent [38].

The second question relates to the capacity of a modelling environment to generate virtual reference models already addressed.

The third question links a Virtual Human and its tissue "wave propagation" properties with signalprocessing (SP) techniques. The in silico development of robust SP techniques using a Virtual Human can only be achieved if the number of reference models is sufficient. This brings us back to the second question.

The fourth question raises the same questions as the last two, but with the added difficulty of inferring the signal characteristics generated by the devices such that their intended role is fulfilled. Today's cardio-stimulators for patients with cardiac failure and rhythmic disorders, or intra-cranial stimulators for patients suffering from Parkinson's disease are such devices.

BDI studies using a VH can be defined by different steps:

1- Model biosignals propagation from internal sources to the body surface

2- Model device-generated signal propagation in the body

3- Model the variability of propagated biosignal by using VH reference models

4- Identify robust traits using signals obtained in situation 3 in and correlation to internal states.

5- Design robust SP and pattern classification methods to detect the identified traits of step 4 and using signals obtained is step 3.

The US patent [22] is somewhat related to these steps. The authors propose a method that calibrates parametric physiological models using real measured images and signals such that the calibrated model fits the observed data. This phase is similar to their other patent [21]. They then propose a noise reduction method by subtracting the predicted signal produced by the selected model and the observed signal that was initially used for calibrating the model. Finally they propose a method to track physiological state changes using a fading memory filter.

However, steps 1 to 4 suppose that we have a statistically significant number of VH reference model. Therefore the main issue related to these four steps is to devise a method that automatically generates a large number realistic VH reference models beyond "simple" model parameter tuning.

Step 5 can be achieved by contaminating the signals obtained in step 3 with random noise of different kinds and with predefined S/N ratios. In a GMSP context, this could be done in the context of automated programming (see section "Self-programming agents") by coupling a "master" PSU network with a "slave" PSU. The "master" PSU chooses signal cases, the "slave" PSU must assemble SP components to detect the traits. Both master and slave PSU are linked to a corresponding FU. In this context the FU corresponds to a (possibly nested) SP program component.

**Non-Biological Fields of Application**

Man-made objects, like natural systems, have a hierarchical structure. An artifact is made of components, each of which may be organized in sub-components. When an artifact performs a task, then at least part of its components have dynamic states and the organizational/functional patterns follow that of living organisms. Therefore multi-scale simulation of complex artifacts is in principle not different from simulating living systems. The main difference between the two lies in the modelling task itself. People involved in CB attempt to discover and capture the salient features of something that already exists. People involved in artifact design must conceive objects that do not exist but are defined in the specifications and in terms of performance, cost, weight, etc.

The observation that Nature produces highly complex patterns from a limited set of agents and behaviours leads us to believe that any spatial pattern can be reproduced by a computer program the simulates cell-like agents interacting in morphogenetic fields that they generate themselves. A building, a city, a room furniture layout all have patterns that are much simpler than those found in living tissues. It doesn't seem far-fetched therefore to admit that models of artifact can virtually be "grown" from "embryonic" models by applying self-assembly and morphogenetic principles. Self-assembly of pre-defined components alone will be analogous to molecular self-assembly while morphogenesis is a more emergent process at the cellular level where components replicate and differentiate.

To continue the analogy with biological systems, what holds for living systems also holds for many man-made object and human organizations. Indeed, any dissipative (heat producing) structure can be described as a functional unit and any complex dissipative structure as a nested functional unit. Most artifacts require, or are characterized by, influxes and outfluxes of matter. They need energy that they transform into other forms such as work, heat and electromagnetic signals for instance. Part of their components participate in information-processing and control mechanism. Artifacts that satisfy this description include electronic devices, biochips, transport systems, buildings, and cities.

What needs to be done is to determine who interacts with whom, how and when. The first part is relatively easy and depends on prior knowledge about components, their role, their functions and how they "fit" together. This teleological, functional and structural knowledge can be represented by binary predicates. The how and when can also be defined a priori: human experts can usually specify the different kinds of central structural "embryos" from which to start a design. In fields such as nanotechnology this is referred to as nucleation. They can also provide a partial knowledge on the temporal order on how components are put together. This partial knowledge can be the starting point of self-assembly and translated into artifact-cell types and N "bosons" particles.

The general approach is as follows. Given a set of components

- Associate an artifact-cell (A-cell) to each component. Each A-cell is a Functional Unit (FU) as defined earlier. A-cell behaviour is equivalent to a living cell's behaviour: mitosis, differentiation, motion, binding, signaling, signal sensing and transduction, apoptosis, and merging.

- Define the N "bosons" particles from knowledge about who fits with who

- Define different possible "embryos". This is cellular-level equivalent to the nucleation phase of molecular self-assembly.

- Address temporal constraints by solving the minimal-labels problem [26]. The minimal labels problem is a particular case of Constraints Satisfaction Problems (CSP) that will find and maintain complete and non-contradictory information about how intervals could be related. The starting point of the CSP is Allen's temporal relations [2].

- From the minimal labels, define all possible signaling sequences between components, i.e., which information particle and when.

- Proceed to self-assembly using the (deterministic-stochastic) continuous-discrete simulation method using the corresponding MFU.

- Memorize A-cell behaviour (division, differentiation,..) when feasible solutions are found. Encode the behaviour in Cellular Automata (CA)-like rules.

*Computer Aided Design (CAD) Tools*

Design engineers exploit sophisticated computer aided design (CAD) software, most of which offer algorithmic modelling support, visual aids and/or formal languages suited to represent the compositional nature of manufacturing. Today's marketed CAD tools do not go much beyond and it is recognized in the manufacturing industry that Knowledge/agent-based CAD software are dearly needed to produce value-added novel products, reduce design/production costs, and shorten the time to market. Ideally, such tools should perform *automated backward engineering* starting from the specifications to multi-scale computational models and design of the intended artifact. What this entails is that future CAD software should be general enough to cover applications in mechanical engineering, civil engineering, architectural design, VLSI technology, aeronautics, and nanotechnology while offering more in terms of specific domain knowledge and pro-active support than the existing products. Generic goal-directed self-assembly tasks would lie at the core of the CAD software but the upper-layers should be able to capture the specificities of each application. GMSP-like CAD tools will go beyond self-assembling predefined template components, by creating novel components using its morphogenetic capability.

References in the literature recognize the fact that Knowledge-Based CAD Systems have a big potential to reduce cost and time for engineering artifacts. The success of marketed CAD tools such as ICAD, PACElab (PACE), CATIA, AutoCAD (Autodesk, 1992), MicroStation (Bentley Systems, 2001) testify the interest in such products.

In FEM-based engineering, analysis subsystems of modern CAD systems (ABAQUS, I-DEAS, etc) can provide effective algorithmic support for adapting FEM to a given problem. However they do not address non-algorithmic issues related to expert heuristics based notably on establishing analogies between a current situation and past cases [47].

Visual software tools for designing solid objects, such as AutoCAD and MicroStation, are environments for solid modelling using concrete visual representations of the components of the design artifacts. In contrast, the tools most commonly used for designing VLSI devices provide no facilities for visual design since they are rather concerned with implementing abstract Boolean functions using purely textual languages. Thus in current CAD environments graphical drafting and textual programming are two separate activities performed with very dissimilar tools.

Current research attempt to bridge the gap between visual modellers and textual programming in order to provide formal representations of geometric modelling in CAD systems [4]. However, the graphical/textual dichotomy, is not the only shortcoming of today's Knowledge-Based CAD Systems. Tools of the "visual class" for instance, are indeed focused on geometrical issues such as verifying the geometrical conformity of components in order for them to "fit" together. Such verifications, however correspond to "end problems" and basic low-level cognitive tasks. Today's research is focused on covering more fundamental high-level and complex tasks such as the defining the functional organization from the specifications, and relating candidate structures that will carry-out the functions.

The literature indicates that the competence of engineering designers lies in their ability to determine the structure-function relationships and to derive heuristics based on past experiences. In terms of AI efficient CAD tools will have powerful Case based Reasoning (CBR) capabilities. Although conceptually "simple", close scrutiny shows that this is a hard problem related to analogical reasoning. We believe that one of the bottle-neck lies in the lack of structured but versatile formal representations of complex systems.

We encounter the same problem in the life sciences where ontologies are not easy to "put together". The concept of pleiotropy exemplifies the case. It is well known that the definition of the functional role of a protein changes as we switch from the molecular, to cellular, tissular and upwards in the hierarchy.

In our framework, the nested structures and the knowledge associated to each allows capturing this notion in a systematic and formal way. But pleiotropy in living organisms can naturally be extended to engineering design since the problem of defining what a component is in terms of its functions is subsumed by the relations that holds between this component and the functional, structural, behavioural and theological knowledge levels of all higher level components to which it belongs.

For instance having an explicit knowledge on how a level-10 SU's structural property influences the behaviour of a level-2 FU and the consequences on the (main) level-0 FU's function is a first step in designing effective CBR programs. The concept of "analogy" loses some of its fuzziness (and perhaps its mystery). It also does not make a difference whether we are speaking about a living tissue or a machine?

Our general strategy then is to export the metaphor of life for the design of novel artifacts, is by first importing teleological and functional concepts from different engineering specialties. Features of living systems will be analyzed in terms that are familiar to professionals in fields such as mechanical, electrical, or process-control engineers. Experience gained from formalizing knowledge of living organism from an engineering perspective will next be re-introduced in KBS-CAD tools. This cross-fertilization, we believe, will benefit both modelling domains.

CBR will be useful in guiding self-assembly and morphogenesis issues. The crux of the problem in our framework is to determine the different fictive "field-matter" interactions. Initial values can be determined from past successful designs. This is a form of an inverse problem. Given a successful design, what kind of fictive "bosons" fields (see "Physics-based simulation section) will allow the molecular representative of each FU to self-construct?

More specifically, CBR and metaheuristics will help in determining (i) the "poles" of the MFUs, (ii) which "molecule" is attracted/repulsed with which other, (iii) the strength of the attractiveness/repulsiveness, (iv) the effective distance with which these field operate (i.e. diffusion coefficients). During self-assembly this information will be transmitted to the N "bosons" field. All these interactions will be local in the sense that MFUs will interact in the mother FU "molecular space" only. Since MFUs can have distinct "poles" analogous to electric multipoles, an MFU moving towards another may link with the latter at distinct compatible "pole" locations. The growth or branching process of SUs will follow a similar path. Note that "growth" and "branching" translates into artifact space as the concatenation of copies of a same component (e.g. resistors connected in series). Activated MFUs will divide and multiply in the morphogenetic fields just as real living cells do. Potential candidates for growth can decide to do so either deterministically or stochastically. Stochastic growth may combine a deterministic component with a random one and constitutes a source of diversity for the corresponding component classes.

The new component(s) will then undergo the standard functional tests using physics-based (and variants) methods.

The MFU's actions associated to a valid new component will include

1- Adding the description of the component as a new daughter of the mother FU or SU

2- Gene-coding and adding of the new gene as a new instance of the corresponding gene class of components.

3- Memorizing the descriptions of the context prior to morphogenesis as well as the morphogenetic events in the mother FU or SU KB.

4- Gene-coding of the context prior to morphogenesis as well as the morphogenetic events leading to a new set CA-like morphogenesis rule.

The gene coding of the new component and how it was built will allow future use of GA-class methods for self-assembly to be applied. Likewise, the gene-coding of the morphogenetic CA-like rules will allow novel morphogenetic rules to be evolved using GA-class optimization methods. The memorizing of the morphogenesis-context (step 3) in declarative form, is not redundant with step 4 since its role -among other- is to allow Cased-Based-Reasoning (CBR) engines to be applied in future similar conditions.

Like self-assembly, morphogenesis can either operate bottom-up or top-down. However, as mentioned in the "Optimization" section the fact that components can self-assemble, and evolve morphogenetically and genetically in a structured top-down manner should greatly reduce the computational complexity.

Perhaps the last word should be given to [28]. "*Just as the development of digital electronics enabled ever more complex microprocessor designs, mLSI allows one to treat microfluidics as a design problem in which components of various complexity are stitched together in a seamless and transparent fashion... However, until recently, focus has been limited to optimizing individual microfluidic components that are often not easily integrated with each other, and microfluidic systems have been designed using a bottom-up approach. A top-down approach simplifies the design of*

*integrated microfluidic systems on a chip by providing a library of microfluidic components, similar to a cell library in LSI design. This would also allow automated software synthesis tools for both microfluidic architecture-level synthesis (i.e., scheduling and resource binding) and geometry level synthesis (i.e., routing and component placement). The development of explicit design rules and strategies allowing modular top-down design methodology is an exciting frontier in microfluidic system design...Going forward, there is a need for computer CAD tools that incorporate mLSI design*."

*Enterprise optimization in the process Industry*

Human organizations such as a company, can also be represented within the GMSP framework. A company is a nested functional unit where each level of nesting corresponds to a particular grain-size (e.g. a department). Whatever the level, there will be mass/energy/storage requirements materialized by the corresponding transfer processes, as well as information processing and control mechanisms carried-out by people and computers. The concept of "mass" here, covers all structural/functional units ranging from "pen" to "office building" or "factory".

Thus a company can be represented as a FU of nested FUs. The highest level designates the company itself, and the next level may designate departments. Therefore the GMSP's architecture with its network of PSU-FU, is particularly well suited to tackle enterprise optimization problems at all levels of the hierarchy, where each component may call for specific optimization methods.

The following excerpt summarizes the situation [27]: "*As a long-term goal, enterprise optimization integrates all activities in the whole business process, from the supply chain to production, and further to the distribution channel. In addition, risk management can also be included as a key technical differentiator....The multiple-layer structure ... is believed to provide the flexibility needed for implementing and operating such a system. Moreover, each layer can be built at an appropriate level of abstraction and over a suitable time horizon. The lower layers capture more detailed information of various local process units over a shorter time horizon, whereas the higher layers capture more of the business essence of the plant over a longer horizon. As a short-term goal, cross-functional integration could include, in a refinery, for example, raw material allocation, inventory management, production management, unit process control, real-time optimization ... For enterprise optimization, effective solutions will likely be even more domain-specific. The fact that we have discussed three very different technologies does not imply a fundamental uncertainty about which one of these will ultimately be the unique "winner"; rather, it reflects a fundamental belief that process enterprise optimization is too complex and diverse a problem area for any one solution approach to satisfactorily address*."

The three technologies the authors refer to are model predictive control (MPC) systems, data-centric modelling and optimization (e.g. statistical methods, meta-heuristics), and adaptive agents.

In the GMSP, FUs need not be of the same nature: they can be machines, departments, production plants, ... Its companion PSU is tailored to the FU's nature and to the control variables to optimize, i.e., its theological, functional, and operational KBs' content, the reasoning engine, and metaheuristics are tailored to the FU. For instance, if the FU is a single department, standard operations research methods can be applied. The diversity of "subjective" meanings associated to material entities reaches its apogee in this application.

*Urban planning and architectural design*

A city for instance can be considered a functional unit with structural units dedicated to mass transfer (e.g. roads), storage (e.g. warehouses), energy transport and storage such as power lines and accumulators. Information-processing and control mechanisms include telephone lines, computers linked to the Internet, and traffic lights systems that attempt to optimize a special class of mass transfer corresponding to motorized transport. Furthermore a "city" functional unit can be partitioned into "block" functional unit which will have the same requirements (on a smaller scale) as a city. Finally, a building is also a functional unit composed of "room" functional units each of which also have the same requirements (on a still smaller scale) than a building, block, or city.

Let the pros speak [19]: "*Recent applications in virtual reality, video games and simulation of city expansion as well as the emergence of problems due to the urbanization, such as the influence of electromagnetic radiations and the forecast of the urban transportation network, creates increasing needs in term of digital mock-ups studies and forecasting. The capacity to quickly generate credible digital city models helps the user to fulfil these needs. A real city satisfies construction rules and depends on multiple influences throughout the time. However the detailed modelling of realistic towns is very challenging for computer graphics. Modelling a virtual city which is detailed enough to be credible for a visiting user is a huge task that requires thousands hours of work. In this context, we think that automatic approaches are well suited for this problem*".

They conclude by: "*The work presented in this state of the art shows the variety of the existing approaches for the city generation. CityEngine, allows a city to be modelled from scratch to exteriors (stages 1 to 5), but no current tool takes into account the seven described stages. Moreover, it is difficult to compare the methods because they result*

*from various research domains. Some of the seven stages presented in this article have not been extensively studied. The block generation, as well as the lot generation, have been less studied. We have begun to work on this stage in order to evaluate the interest of geometric methods such as Voronoi diagrams and the straight skeleton approach. It seems possible to create a unified tool that should be able to process all the stages. But this will probably be a difficult task*".

In a nutshell, the methods gathered in the literature by the authors can be classified into Shape grammars, L-systems, Constraints Satisfaction Problems (CSP), standard CAD tools for visualization, and metaheuristics for interior layouts. Each stage calls for different approaches.

The GMSP offers a unified approach for all seven levels mentioned by the authors. As mentioned, a city is a functional unit that can be decomposed into "block", "lot", "building" and "room" functional units. In the GMSP terminology they are functional units in the sense that each has mass/energy transport requirements (avenues, roads, power lines,..), communication links requirements and so on. The kind of prior data for generating a city is given by the authors: "*We need to know at least the limits of a city to be able to generate it. We consider the definition of the surface that the city covers as the minimum level of information. This information is generally defined within a GIS (Geographic Information System). It is also possible to constraint the generation in order to respect data map: geographical (altitude, hydrography and vegetation) or socio statistical (population density, street patterns and elevation).*"

This is the kind of prior information that uses the GMPS for organogenesis and the following is a very rough sketch of a possible city growth scenario. Like an organ's outer boundary, the (new) city's outer boundary is given. A "city-embryo" is the existing village and the "mesenchyme" space inside the city-boundary. A new city is an FU with its own mass transport requirements. Attractive inductor "road-molecules" are placed near at the barycenter of the new city boundary where they generate a "mitotic" and attractive morphogenetic field for "road-cells". Activable "road-cells" are randomly dispersed on existing roads outside the new city's outer boundary. The activated "road-cells" branch-out and start multiplying towards the city center. The width of a branching road can never be greater than that of the "mother" road. When the new city's outer boundaries are reached, multiplying "road-cells" either stop multiplying (contact "mitosis" inhibition) or continue to do so by passing around the new city's boundary. The number and width of the new (unfinished) roads entering the city boundary (not passing around it) must satisfy the new city's mass transport requirements. If this is not the case a new road-branching scenario must be initiated. The new "road-cells" in contact with the new city's outer boundary "differentiate" and send attractive inductive signal for activable stem "block-cells" that are within the new city's boundaries and located at the periphery of the original village. Stem "block-cells" are like a certain class of living cells: "squarish" in shape unless forced to be otherwise. Once activated they grow and divide uniformly and in synchrony with other new blocks-cells at the village's periphery and in the direction of the morphogenetic field gradient for "bloc-cells". The block-cells stops growing in the direction of near-contacts (e.g. another block-cell or a road) and will grow parallel to the contacts until its assigned surface area is reached. The assigned surface area may be defined randomly around an average-value given as prior knowledge. Now, each block-cell is itself an FU with its own mass/energy transport requirements. Thus each new "block-cell" will in turn generate a "mitotic" and attractive morphogenetic field for "road-cells". The activated "road cells" will be on nearby existing roads or at the tip of (unfinished) new roads. They will start multiplying in a branching or bifurcating (for tip "road cells") patterns towards the block center. When a new block's boundaries are reached multiplying "road cells" either stop to multiply or continue to do so but by passing around the new block's boundary. The width of the new (unfinished) roads entering the block (not passing around it) will be determined from the new block's mass transport requirements with the usual constraint that they cannot be larger than the "mother" roads. Now, each block has stem "building-cells" that will also grow and multiply within the block. As FUs they will require streets that will grow towards and around them. "Unfinished" streets and roads will be attracted to equivalent (in width) and nearby ones and grow until they meet. Here, the "central" SUs are cities, blocks, buildings while companion SUs are roads, and streets. Of course other companion SUs include power-lines, telephone cables and sewers. This scenario is "pure" morphogenesis, the other end of the spectrum is self-assembly of pre-defined blocks buildings, roads and streets segments but we would fall into a classical NP-hard combinatorial problem. Intermediate solutions would encompass both and can be explored by the GMSP.

Now, let's imagine a morphogenetic-based room layout: Each room is assorted with internal structural units (SU) such as chairs and tables. First, each representative MFU is a "polarized multi-pole" the main poles of which are called "up" and "down". The secondary poles will be called "front" and "back" for chairs. The MFUs are constrained to move on the floor, say in a random fashion. Suppose that chairs and tables "dislike" each-other but like their own kin. Suppose further that chairs "front" poles are the parts that attract each other. Then after a while the molecular companions of chairs will tend to regroup in circles with the front poles facing each other in one part of the room, and tables will do the same in another distant part. If, on the contrary, chairs' "front poles" are attracted to tables and tables and chairs "dislike" their kin, then the tables will tend to be uniformly distributed around the room and the chairs will tend to gather around tables with the front poles facing each table. Since chairs avoid each other they will not be too close to one another. Thus different room layout patterns can be generated by defining the "polarity" of each MFU, the attractive/repulsive morphogenetic fields, the extent of their short-range "potential barrier", and their diffusion coefficients.

*Self-Programming Agents*

A computer program is also an artifact. Like physical artifacts programs have a hierarchical organization and may communicate with one-another through shared variables and data, as well as input/output ports. Programs also have a purpose. Thus generic goal-directed self-assembly can apply to software components. In this context, the specifications will include the program's purpose, input/output data types and so forth. An agent may designate a program that accomplishes a task such as "sorting" or "search a local optimum". The GMSP is also conceived for software self-assembly.

One of the goals of AI is to create computers that can program themselves [39]. There are two main paradigms to Automated Programming (AP): Genetic Programming (GP) [39] and Automated Self-Assembly Programming Paradigm (ASAP) [24][25] that bears some similarity with the Particle Swarm Optimization (PSO) [25] and a US patent [7].

GP extend genetic algorithms (GA) to handle functional computer programs represented as tree structures. Like GA, GP is based on the natural selection metaphor ideas using reproduction, crossing-over and mutation operators and fitness functions that measure the distance between a program and the desired output. Each function call forms an internal node of the tree, while numeric values and variables are represented as leaf nodes. Crossing-over operators swap subtrees between parent trees to produce offspring.

The limits of GP include destructive crossing-over, bloating, and scalability. Destructive crossing-over split "good" subtrees while bloating as its name indicates corresponds to unwarranted tree growth without improving program fitness. Progresses towards overcoming some of GP's limitations [39] have been done recently, but to our knowledge the scalability problem remains. Also, from a practical standpoint, LISP-like functional programming is not as widespread as OO programming for instance.

ASAP focuses on unguided self-assembly rather than natural selection. Software components are represented by molecules with binding sites that correspond to components' input and output ports. The binding sites are associated to data types and molecules can bind if the output data type of one is conform to the input data-type of the other.

ASAP uses the ideal gas metaphor, where (N) components are placed in a pool (V) and move randomly and collide at the boundary that produces a pressure (P). As in ideal gas the pressure increases when temperature (T) increases if the volume is kept constant. Using N, V and T as free parameters one can study how different combinations of these parameters influence the diversity of component aggregates and the time to reach equilibrium.

Recently, the initial ideal gas model was modified by randomly selecting leader molecules, that play the same role as flock leaders in PSO. Non-leader molecules become attracted to leaders when their distance is less that a distance threshold. Not surprisingly, the reduced randomness has allowed shortening the time to equilibrium but at the expense of a reduced diversity. Also, to our knowledge, the question of fitness as not been addressed in these preliminary studies, i.e., are there any good solutions when equilibrium is reached?

Self-constructing software research is still in its infancy, and there is no way to predict which paradigm, if any, will prove to be the better one. Probably no single approach will prove to be superior in all situations although we can conjecture that the scalability problem will not be as important for the Particle Swarm approach. In all cases, a trade-off is (will be) necessary between (unguided) generality and (guided) efficiency.

The recent history of metaheuristics where initial blind-search GAs have evolved into memetic algorithms augurs that AP will follow a similar path. It is interesting to note for instance, that in order to overcome GP's limitations, biases are introduced by defining node-types, node-states, and by applying heuristics that increase efficiency by limiting the search-space.

Likewise, the recent results in ASAP show that introducing leader molecules shortens the time to equilibrium but at the expense of a reduced diversity. Hence, just like metaheuristics, search-space reducing biases in the form of domain-dependent heuristics or any other form of (implicit/explicit) knowledge will be necessary to apply AP in widespread but non-trivial applications.

Indeed, there are three major issues related to large-scale AP: finding valid programs (programs that compute the desired output), finding optimally valid programs (programs that compute the desired output in optimum or near-optimum time), and time-to-convergence (time to produce a valid program).

In ASAP, time-to-equilibrium cannot be equated to time-to-convergence if no valid programs are found. The no-free-lunch theorem holds in AP just as in everything else. In the PSO approaches, the condition that two "molecules" bind because their input/output data type match is a very weak constraint when we think about how specific programs can be. For instance, the output of a bubble-sort program and the input of a sorting program by dichotomy can be 2n-arrays of integers. Although there is input-output compatibility, does it make sense to assemble the two? Introducing ontologies about computer programs will certainly contribute to the self-assembly process, but there remains the question of the KB architecture and self-assembly paradigm.

The GMPS is designed to meet this challenge by providing a framework that can accommodate GP and Particle Swarm (PS) paradigms indifferently.

An FU can represent a software program. When this is the case, the FU's daughter FUs are subprograms and the companion PSU is a meta-level agent that discusses and reasons about the program. In this context, the GMSP's architecture allows to adopt two different paradigms of automatic programming: one based on Genetic Programming, and the other based on Morphogenesis. Thus the same computational framework that models the self-assembly and the morphogenesis of living organisms can be used to self-assemble and "grow" programs.

In a PS context, the structural units are replaced by program components and an FU is a simpler object:

- A pointer to a companion molecule MFU

- A pointer to a program component (Swarm) or a function name (GP)

- A short-term memory

- A long term memory that describes the history of the FU

- A pointer to a descriptive KB common to all FUs of the same class

- A list of pointers to contained "daughter" FUs

- Description of input data type

- Description of output data type

The short-term memory includes

- Free parameters and program state variables

- The program code

In an ASAP-like context, the main FU has only one level of nested FUs. The main FU's working-space serves as the pool within which the molecular representatives of the daughter FUs are in motion, collide and self-assemble if their "poles" are compatible. The main FU's free parameters are N, V and T. Search strategies for exploring how these parameters can influence diversity and time-to-equilibrium can be carried-out by the companion PSU

In a GP context, the structural units are replaced by program components and an FU is even a simpler object:

- a function name if non-terminal or a value/variable name if a leaf FU

- A long term memory that describes the history of the FU

- A list of pointers to contained "daughter" FUs

Thus in a GP context, an FU with nested daughter FUs, like all functional programs, defines a recursive function. For the node FUs' (those that contain other FU) the program component is a function call, and for the leaf FUs' the program component is either a variable or a constant.

In AP the FU's companion PSU plays a similar meta-level role as in the case of material objects. An as usual, the GMSP has two isomorphic and parallel worlds: the world of (nested) programs and the world of (nested) agents that perceive and act on the nested programs or upon themselves.

The GMSP, extends automated programming (AP) "as is", in several directions. Most importantly, the rather all-or-nothing "leader attraction" can be extended and modulated by morphogenesis where both attractive and repulsive forces are implicated. For instance, the molecules representative of two sorting methods should be repulsive for one another.

On a contrary, given a particular domain, certain combinations of software components are more likely to give interesting results. They should be attracted to one another.

Take pattern recognition (PR) for instance, a typical PR program is an orderly composition of noise-reduction (NR), data segmentation (DS), feature extraction (FE) and classifier (C) components. Finding robust PR program is a difficult task and a Particle Swarm approach to the automated programming of PR will not only benefit from, but will require, a significant amount of prior knowledge to be efficient. Feature extraction and classifier programs constitute families of components such model-free or model-based estimators for FE and PCA and Neural Nets for classifiers that can be characterized in the present context by some form of mutual attractiveness, between each family and some form of repulsiveness within each family. On the other hand NR and C sub-programs should normally exhibit mutual repulsiveness both within and between each family. This hierarchy of attractiveness falls naturally into our nested FU concept.

To be more specific, the main FU will designate the PR program, its daughter FUs (first level) will be compose of N1 copies of "NR" molecules, N2 copies of "DS" molecules, N3 copies of "FE" molecules, and N4 copies of "C" molecules. Each level1 cell will itself contain its own set of level2 molecule components corresponding to sub-programs of the "NR", "DS", "FE" and "C" programs. Now, like in any morphogenetic program, each molecule-type (whether from level1 or level2) will have "poles" corresponding to input/output ports that will generate a number of attractive/repulsive morphogenetic signals for other molecules' poles. A constructive bias will thus be introduced and added to the molecules' random motion at each of the two levels. Increasing the temperature will increase the contribution of the molecules' random components and in the limit attractive/repulsive signals will have no effect on the end result. On the contrary, as temperature decreases, the morphogenetic signals will dominate, resulting on different cellular aggregate patterns. In all cases, the final step of the morphogenetic program will be the fusion of bounded level1 molecules' to allow level2 sub-programs to form inter-family self-assemblies and eventually form valid programs.

This rough sketch of the GMSP automated programming paradigm illustrates a more subtle, modulated and more informed approach to AP since it depends on the "polarity" of each molecules', the attractive/repulsive morphogenetic fields, their diffusion coefficients in addition to the number of copies, volume and temperature.

Perhaps the most accomplished software self-assembly paradigm that emulates living cell mechanisms is the one described in the US Patent 6957415 [7]. Their framework defines programs as machines that are organized within cell membrane-like "encapsulants". The typology of "machines" is similar to the ones that classify proteins: certain machines act as signaling molecules, others as membrane receptors, and others have deterministic behaviour which corresponds to the actual program components that can be executed when the actuating conditions are satisfied. Actuation is triggered when signaling machines match the proper receptor machines that are "fixed" on encapsulants or at bounding sites of other machines. Thus the analogy of molecular activation by enzymes cascades (machine-machine bounding) as well as cell activation by ligand binding on membrane receptors are emulated within this framework. In addition, ligand-receptor binding can be deterministic or stochastic, and the strength of the bond can either be strong covalent bound, or weak "Van der Walls" types. Program nesting by encapsulants, passive activation of programs and dynamic overriding of programs by "receptor" inhibition can be achieved making this framework highly adaptive, notably for real-time applications.

What is not mentioned in [7] is the meta-level structure that should guide the assembly process. It appears that the Event Manager plays the main role in this respect but the latter is, as far as we understand, defined by a human programmer. Therefore the patent [7] is focused on the implementation of an adaptive software environment more than in the automated design of artifacts.

The authors also contend that object orientation is not suited for the implementing such frameworks. This is true if one attempts to directly assemble OO programs components. However, when OO components are represented by representative molecules (i.e. the MFU), then program design using the full metaphor (and beyond) of living cells is possible.

In today's C++ environment switching from a "molecular" representation to an actual (C++) running program is, to our knowledge, not possible. Hence the GMPS "as is" is not suited for real-time software self-assembly. But our main objective here is not focused on real-time software self-adaptation but on the off-line automated generation and design of complex systems, be they models of living ones, artifacts or computer programs intended to solve hard and specific real-life problems.

We also believe that in order to fully introduce the metaphor of Nature in self-assembly issues, then quantifying field-matter interactions holds one of the keys to the problem. But to do so, a knowledge-level understanding of the domains of interest as well as a framework to capture this knowledge is mandatory.

*Nanotechnologies*

In [11] we can read: "*Today, nanophase engineering expands in a rapidly growing number of structural and functional materials, both inorganic and organic, allowing the manipulation of mechanical, catalytic, electrical, magnetic, optical, and electronic functions. The synthesis of nanophase or cluster-assembled materials is usually based upon the creation of separated small clusters which are then fused into a bulk-like material or as a thin film or even by embedding into a solid matrix, materials like polymers or glass either in a disordered manner or in an ordered array*"

Stated simply, nanoscale structures will self-assemble so as to minimize the molecular system's Gibbs free energy.

Today there are two major modelling tools that carry-out the job: Monte Carlo simulation and Molecular Dynamics. As already noted, they are computationally intensive, especially MD.

Partitioning the problem in clusters and sub-clusters where local interactions mostly prevail is a means to reduce computational costs and a means to employ asynchronous parallel computing environment such as provided by GRID technology. In addition, if we can adapt the simulation tool dynamically and for each cluster in order to focus on certain areas of the system while making gross calculations for other parts of the system, we optimize the computational resources without sacrificing the essential. Finally, by assigning an agent to each cluster and sub-clusters in order to make local decisions based on more global assessments (via inter-agent and inter-level communication) of the energy landscape and the intermediate nanostructures, then computation time may be saved by retrieving from potential dead-ends. Also, the simulation of nano-particles in interaction with biological tissue is opening new avenues for the medical applications of nanotechnologies [12].

This area merges nanotechnology with Virtual Human modelling. This includes the development of swarm microscopic robots interacting with each-other and with biological tissues in order to repair tissues and eradicate diseases.

*Data mining*

GMPS agents are self-descriptive and articulate. They will be capable of eliciting data from the net in order to self-improve. The long-term memory of an FU contains knowledge about itself in a teleological, functional, behavioural and structural sense. In addition, the hierarchical organization allows an FU to know what its constituent parts are and to what higher-level entity it belongs.

In a data-mining context, the companion PSU can be conceived as a search-engine dedicated to regularly update the FU's KBs by eliciting data on the net. Pertinent queries reflecting the different perspectives about a material entity can be formulated to web-based data banks and data warehouses. Because of the nesting, the queries can proceed upward and downward. This ability to shift in the vertical and horizontal directions allows a broad spectrum of queries to be formulated.

For instance, returning to our "pleiotropy" example, a query on the net about the role a level-10 SU's structural property on the behaviour of a level-2 FU and the consequences on the (main) level-0 FU's function could be formulated by a PSU specifically designed to search structure/functions relationships of complex systems on the net. A large set of PSU-defined queries can regularly be issued on the net and the collected data extracted and transformed into knowledge using Information Extraction (IE) techniques guided by another PSU. Since the declarative knowledge is formally represented in First Order Logic (FOL) it is not technically difficult to transform FOL queries into web-dedicated but less expressive logical expressions that are compatible with web standards (DAML, RDF, OWL, OIL+DAML) for representing ontologies. The main point here is that in order to ask pertinent questions about a domain, one must have knowledge about that domain. And the more structured the knowledge is, the more structured the questions and the answers will be. With a little bit of work, GMSP agents should be able to know what they don't know, fill in the gap with the right questions, and efficiently transform the elicited data into structured knowledge using IE engines guided by the same knowledge they are attempting to increase.

*Decision-making*

GMPS agents have decision-making capability and can be utilised, for example, for self-diagnosis and automated control of devices/machines.

The starting point is (i) artifact with sensors, (ii) communication links, wireless or otherwise between the artifact and a PC, (iii) an in-silico multi-scale model of the artifact (FU), (iv) the isomorphic multi-scale decision-making and communicating PSUs. The short-term memories, contains information on the current component situation (e.g. general context, past actions, local control and state variables). The local KB and the shared KB contain knowledge on what the variable should be. This is self-diagnostic.

In case of real-time applications with automated control, simple operational rules can be applied. Usually the rules are given by human experts, but we argue that this is due to the rather crude "first-principles" models that are available. If a method is capable of correctly modelling a human body, then a fortiori it can model an artifact. The "trick" is to self-organize operational rules into hierarchies which mirror the nested structure of the real system. They naturally self-organize because of two reasons: local rules are associated to each FU, and increasingly more general rules can be abstracted as we shifting upward in scale. In any case, all the rules will be derived automatically from off-line simulations of abnormal behaviour and putative self-correcting procedures of the system's actuator components. Abnormal behaviour can automatically be simulated by (i) "if-then" queries formulated by PSUs specialized in doing so as outlined in the "Data mining" section and translated into initial conditions. Latter-on human experts can validate the job.

Diagnosis using internal state variables and external observations (e.g. "symptoms") is also possible. The prototypal example is medical diagnosis.

The difficulty of medical diagnosis can be summed-up as follows: "make the fewest reasonable assumptions with the least amount of observables". Directly using "first-principles" in the hypothetico-deductive loop is just impossible because the statistical entropy between the (few) observations and the possible internal states is huge. The (just mentioned) generation of operational rules augmented with statistical data (e.g. Evidence Based Medicine") can carry-out

the load.

*E-learning, e-training*

An agent who has accurate representations of physical objects, and the means to talk about the object from many different viewpoints has the potential to be a good teacher. For artificial agents, if each sub-component has the same ability to do so it is even better.

GMPS agents are conceived this way although right now the "talk" part is limited to stating FOL facts and events. However, since the FOL statements are well structured, Natural Language Processing (NLP) techniques can easily make them user-friendly. The generation of many products can be imagined:

1. The automatic generation of multi-media teaching resources with realistic 3D animations text and voice on a large scale (thousands) using GRID technology. This is technically feasible since each object can self-describe.

2. The automatic generation of interactive multi-media teaching resources with embedded intelligence capable of synchronizing 3D scenes with text and voice. This is technically feasible since each object can self-describe, can be associated to corresponding 3D scenes, and is capable to producing questions and answers.

3. The realization of intelligent training tools. In contrast with learning tools, ideal training tools should have several distinguishing features: (i) require an active role on the part of the learner by putting the latter in practical situations (e.g. diagnostic), (ii) detect the learner's errors in terms of flawed reasoning and/or incomplete/incorrect knowledge, (iii) construct their argumentation from the reasoning and the knowledge standpoints, (iv) show the right 3D scenes in synchrony with the argumentation.

REFERENCES

(1) A. Adamatzky, A. Wuensche, B. De Lacy Costello. Glider-based computing in reaction-diffusion hexagonal cellular automata. Chaos, Solitons and Fractals, 27:287-295, 2006.

(2) Allen J.F. Towards a general theory of action and time. Artificial Intelligence, 23(2):123-154, 1984.

(3) N. Ayache, J.-P. Boissel, S. Brunak, G. Clapworthy, G. Lonsdale, J. Fingberg, A. Frangi, G. Deco, P. Hunter, P. Nielsen, M. Halstead, R. Hose, I. Magnin, F. Martin-Sanchez, P. Sloot, J. Kaandorp, A. Hoekstra, S.V.S. Jan, M. Viceconti. EC - DG INFSO, DG JRC (editors), Towards Virtual Physiological Human: Multilevel Modelling and Simulation of the Human Anatomy and Physiology, 2006, Virtual Physiological Human: White paper.

(4) O. Banyasad, P. T. Cox. Integrating design synthesis and assembly of structured objects in a visual design language, in:Theory and Practice of Logic Programming (TPLP), Cambridge University Press New York, NY, USA. 5(6):601-621, 2005.

(5) Bennett B. and Galton A. P. A unifying semantics for time and events. Artificial Intelligence, 153:13-48, 2004.

(6) Bochman A. A causal approach to nonmonotonic reasoning. Artificial Intelligence, 160(1):105-143,2004.

(7) Bouchard; Ann M. and Osbourn; Gordon C. Method for self-organizing software. US Patent 6957415, October 18, 2005. Sandia Corporation (Albuquerque, NM).

(8) Brewster C. and O'Hara K. Knowledge representation with ontologies: Present challenges - Future possibilities. Int. J. Human-Computer Studies, 65(7):563-568, 2007.

(9) Donnelly M. A formal theory of reasoning about parthood, connection, and location. Artif Intell,160:145-72, 2004.

(10) Dressler G. R. The Cellular Basis of Kidney Development. Annu. Rev. Cell Dev. Biol. 22:509-29, 2006.

(11) Dutta J. and Hofmann H. Self-Organization of Colloidal Nanoparticles. in Encyclopedia of Nanoscience & Nanotechnology, American Scientific Publishers, 2005.

(12) H.B. Frieboes, J.P. Sinek, O. Nalcioglu, J.P. Fruehauf, and V. Cristini. Nanotechnology in Cancer Drug Therapy: A Biocomputational Approach. In M. Ferrari, A.P. Lee, and L.J. Lee (eds.), BioMEMS and Biomedical Nanotechnology, Springer, New York, NY, 2006.

(13) A. K. Goel, S. R. Bhatta. Use of design patterns in analogy-based design. Advanced Engineering Informatics, 18:85-94, 2004.

(14) Goldberg; David E., Sastry; Kumara and Pelikan; Martin. Methods for efficient solution set optimization. US Patent 20060212279, Kind Code A1, September 21, 2006. This invention was made with Government support under Contract Number F49620-03-1-0129. Greer, Burns & Crain 300 S Wacker Dr 25th Floor Chicago, IL 60606 US.

(15) Goldberg; David E., Sastry; Kumara, Lobo; Fernando G. and Lima; Claudio F. Adaptive optimization methods. US Patent 20070208677, Kind Code A1, September 6, 2007. Greer, Burns & Crain 300 S Wacker Dr 25th Floor Chicago, IL 60606 US.

(16) F.J. Higuera, S. Succi, and R. Benzi. Lattice gas dynamics with enhanced collision. Europhysics letters, 9: 345-349, 1989.

(17) Krasnogor N. Self Generating Metaheuristics in Bioinformatics: The Proteins Structure Comparison Case. Genetic Programming and Evolvable Machines, Kluwer Academic Publishers, The Netherlands, 5(2):181-201, 2004.

(18) Kuo; Michael D. Method for integrating large scale biological data with imaging. US Patent 20060269476, Kind Code A1, November 30, 2006. Dennis A. Bennett, Esq. 560 Legends View Drive Eureka, MO 63025 US.

(19) M. Larive, Y. Dupuy , V. Gaildrat. Automatic Generation of Urban Zones. In : The 13-th International Conference in Central Europe on Computer Graphics, Visualization and Computer Vision, WSCG'2005, Plzen, Czech Republic. Vaclav Skala (Eds.), Vaclav Skala, p9-12, 2005.

(20) D.-Y. Lee, R. Zimmer, S.-Y. Lee, S. Park. Colored Petri net modelling and simulation of signal transduction pathways. Metabolic Engineering, 8(2):112-122, 2006.

(21) Lett, Gregory Scott. Automated hypothesis testing. US Patent 20030033127, Kind Code A1, February 13, 2003. Physiome Sciences, Inc. 150 College Road West Princeton, NJ 08540 US.

(22) Lett, Gregory Scott and Bottino, Dean C. Biological modelling utilizing image data. US Patent 20030018457, Kind Code A1, January 23, 2003. Physiome Sciences, Inc. 150 College Road West Princeton, NJ 08540 US.

(23) Lett, Gregory Scott, Yu, Haoyu and Li, Jian. System and method for modelling biological systems; US Patent Application 20030009099, Kind Code A1, January 9, 2003. Physiome Sciences, Inc. 150 College Road West Princeton, NJ 08540 US.

(24) Li L., N. Krasnogor, J. Garibaldi. Automated Self_assembly Programming Paradigm: Initial investigation, In Proceedings of the Third IEEE International Workshop on Engineering of Autonomic & Autonomous Systems, p25-34, Potsdamm, Germany, 2006.

(25) Li L., N. Krasnogor, J. Garibaldi. Automated Self_assembly Programming Paradigm: A Swarm Realization. In Proceedings of the Workshop on Nature Inspired Cooperative Strategies for Optimization, p123-135, Granada, Spain, 2006.

(26) Keretho S. And Loganantharaj R. Reasoning about Networks of Temporal Relations and Its Applications to Problem Solving, J. Appl. Intell., 3, (1993) 47-70

(27) R. Kulhavy, J. Lu, and T. Samad. Emerging technologies for enterprise optimization in the process industries. In J. B. Rawlings, B. A. Ogunnaike, and J.W. Eaton, editors, Chemical Process Control VI: Sixth International Conference on Chemical Process Control, Tucson, Arizona, 2001. AIChE Symposium Series, 98(326): 352-363, 2001.

(28) Melin J. and Quake S.R. Microfluidic Large-Scale Integration: The Evolution of Design Rules for Biological Automation. Annu. Rev. Biophys. Biomol. Struct. 36:213-31, 2007.

(29) Meno-Tetang G. M. L., H. Li, S. Mis, N. Pyszczynski, P. Heining, P. Lowe, and W. J. Jusko. Physiologically Based Pharmacokinetic Modelling of FTY720 (2-Amino-2[2-(-4-octylphenyl)ethyl]propane-1,3-diol hydrochloride) in Rats After Oral and Intravenous Doses. Drug Metabolism And Disposition, 34(9):1480-1487, 2006.

(30) Olivier, B. G., Rohwer, J. M., and Hofmeyr, J. H. Modeling cellular systems with PySCeS. Bioinformatics 21: 560-561, 2005.

(31) Popova-Zeugmann L., M. Heiner, I. Koch.Time Petri Nets for Modelling and Analysis of Biochemical Networks. Fundamenta Informaticae, 67:149-162, 2005.

(32) Prendinger H. and Ishizuka M. A creative abduction approach to scientific and knowledge discovery. Knowledge-Based Systems, 18(7):321-326, 2005.

(33) Puchinger J. and Raidl G. R. Combining Metaheuristics and Exact Algorithms in Combinatorial Optimization: A Survey and Classification. In J. Mira and J. Alvarez, editors, Proceedings of the First International Work-Conference on the Interplay Between Natural and Artificial Computation, vol. 3562 of LNCS, p41-53. Springer, 2005.

(34) Reed C. Representing dialogic argumentation. Knowledge-Based Systems, 19:22-31, 2006.

(35) Rice, John Jeremy and Lett, Gregory Scott. Method and system for modelling biological systems. US Patent 20020091666, Kind Code A1, July 11, 2002. Physiome Sciences, Inc. 150 College Road West Princeton, NJ 08540 US.

(36) T. Rodgers, M. Rowland. Physiologically Based Pharmacokinetic Modelling 2: Predicting the Tissue Distribution of Acids, Very Weak Bases, Neutrals and Zwitterions. Journal Of Pharmaceutical Sciences, 95(6):1238-1257, 2006.

(37) Schulz S. And Hahn U. Towards the ontological foundations of symbolic biological theories. Artificial Intelligence in Medicine, 39:237-250, 2007.

(38) Siregar P. Construction procedure in three dimensions of a virtual organ representative of a real organ. European Patent n° 00 931 339.6, May 20, 2000.

(39) Stewart R. Genetic Programming: Computers That Program Themselves. CSCI 373: Artificial Intelligence, May 18, 2004.

(40) Tannenbaum E. When does division of labor lead to increased system output? Journal of Theoretical Biology, 247:413-425, 2007.

(41) T. Turner, S. Schnell, and K. Burrage. Stochastic approaches for modelling in vivo reactions. Computational biology and chemistry, 28(3):165-178, 2004.

(42) K. Iguchi, S. Kinoshita, H. S. Yamada. Boolean dynamics of Kauffman models with a scale-free network. Journal of Theoretical Biology, 247:138-151, 2007.

(43) Ujjin S. And Bentley P.J., Particle swarm optimization recommender system, in: Proceedings of the IEEE Swarm Intelligence Symposium, 124-131, 2003.

(44) Whitesides G. M. and Grzybowski B. Self-Assembly at All Scales. Science, 295(5564): 2418 - 2421, 2002.

(45) Winslow; Raimond, Rounds; Donna and Scollan; David. Computational system and method for modelling the heart. US Patent 5947899, September 7, 1999. Physiome Sciences (Princeton, NJ).

(46) Wolkenhauer O., M. Ullah, W. Kolch, and K. Cho. Modeling and simulation of intracellular dynamics:Choosing an appropriate framework. IEEE Transactions on NanoBioscience, 3(3):200-207, 2004.

(47) Wriggersa P. et al, Intelligent support of engineering analysis using ontology and case-based reasoning. En-

EP 2 133 829 A1

gineering Applications of Artificial Intelligence 20:709-720, 2007.

**Claims**

1. A computer simulation model of a biological system, the model comprising:

   a plurality of functional units representing physical objects within the biological system being modelled, each functional unit having an associated memory capable of storing a current state of the functional unit; and
   a plurality of problem solving units, each functional unit having at least one problem solving unit associated therewith, each problem solving unit being adapted to act on its associated functional unit to change the state of the functional unit.

2. A computer simulation model according to claim 1, wherein the plurality of functional units are nested to form a hierarchical network of functional units.

3. A computer simulation model according to claim 2, wherein the plurality of problem solving units are nested to form a hierarchical network of problem solving units with a hierarchical structure corresponding to that of the functional units.

4. A computer simulation model according to claim 2 or claim 3, wherein the levels in the hierarchical structure are representative of scale of the system being modelled, higher levels in the structure representing a larger scale.

5. A computer simulation model according to any one of the preceding claims, wherein each functional unit has one or more structural units linked thereto, each structural unit representing a physical structure and having an associated memory for holding characteristics of the physical structure.

6. A computer simulation model according to any one of the preceding claims, further comprising one or more knowledge bases, each functional unit being associated with at least one knowledge bases containing knowledge relevant to the associated functional units.

7. A computer simulation model according to claim 6, wherein the plurality of functional units are categorised into a plurality of classes, each class containing one or more functional units, and the functional units of each class sharing a common knowledge base.

8. A computer simulation model according to any one of the preceding claims, wherein each functional unit has a molecular functional unit associated therewith, the molecular functional unit being adapted to control self-assembly of the functional units in the model.

9. A computer simulation model according to claim 8, wherein the functional unit has an associated 3D space matrix populated with a plurality of bosons and the molecular functional units each have one or more poles that interact with the bosons in the 3D matrix to guide the self-assembly of the associated functional units.

10. A computer simulation model according to any one of the preceding claims, wherein the functional units have access to a shared repository of physics-based simulators.

11. A computer simulation model according to any one of the preceding claims, wherein the biological system is a human organ.

12. A computer simulation model of a complex system, the model comprising:

    a plurality of functional units representing objects within the complex system being modelled, each functional unit having an associated memory capable of storing a current state of the functional unit; and
    a plurality of problem solving units, each functional unit having at least one problem solving unit associated therewith, each problem solving unit being adapted to act on its associated functional unit to change the state of the functional unit.

13. A computer simulation model according to claim 12, wherein the complex system being modelled is selected from:

a physical artefact;
a business enterprise;
an urban environment; and
a computer program.

**14.** A method of simulating a biological system or other complex system using a model according to any one of the preceding claims.

**15.** A method of generating a computer simulation model of a biological system or a complex system according to any one of claims 1 to 13, the method comprising providing a plurality of functional units with associated molecular functional units and problem solving units and enabling the model to self-assemble.

Model of the human
body
(unit: meter)

FIG. 1

Organ models
(unit: meter)

FIG. 2

Kidney model
(unit: cm)

FIG. 3

Kidney model (interior)
(unit: cm)

FIG. 4

Renal pyramid model
(part of the kidney)
(unit: cm)

FIG. 5

Multiple nephrons
model (*)
(unit: mm)

FIG. 6

Single nephron
model
(unit: mm)

FIG. 7

Glomerulus model with and without Bowman's
capsule
(part of the nephron) (unit: 1/10 mm)

FIG. 8                    FIG. 9

Circulation model of a portion of the glomerular capillary
with moving red blood cells and ions (unit: 10 um)

FIG. 10          FIG. 11          FIG. 12

Morphogenesis of a juxtamedullar region of the kidney:
Light grey ducts correspond to renal collecting ducts and the darker
ducts to arterial and venous arcuate vessels

FIG. 13          FIG. 14          FIG. 15

Morphogenesis of a juxtamedullar region of the kidney:
generation of interlobular arterial and venous vessels with -starting from fig.17 -
the formation of nephrons and surrounding capillary networks

FIG. 16          FIG. 17          FIG. 18

Morphogenesis of a juxtamedullar region of the kidney:
Full development of the juxtamedullar region with growing collecting
ducts, branching nephrons and surrounding capillary networks

FIG. 19          FIG. 20          FIG. 21

Matter matrix size:   Sx: 20      Sy: 20      Sz: 60

**Print to file**

Select matter cell:   I: 7      J: 8      K: 44

## Cell Processes

| Cell Name | Cell IdNb | Process Name | I Inf | I Sup |
|-----------|-----------|--------------|-------|-------|
| RINMC | 3696 | CellDifferentiation:RMC->RINMC | 0 | 1 |
| RINMC | 3696 | Exocytosis:IGF1->IGF1 field | 1 | 2 |
| RINMC | 3696 | CellDivision: (10;7;45)->(10;7;44) | 1 | 2 |
| RINMC | 3696 | CellMigration: (10;7;45)->(9;7;44) | 1 | 2 |
| RINMC | 3696 | Exocytosis:IGF1->IGF1 field | 2 | 3 |
| RINMC | 3696 | CellMigration: (9;7;44)->(9;8;43) | 2 | 3 |
| RINMC | 3696 | Exocytosis:IGF1->IGF1 field | 3 | 4 |
| RINMC | 3696 | CellMigration: (9;8;43)->(8;7;43) | 3 | 4 |
| RINMC | 3696 | Exocytosis:IGF1->IGF1 field | 4 | 5 |
| RINMC | 3696 | CellMigration: (8;7;43)->(7;8;44) | 4 | 5 |

Display
Clear
Exit

### Events

Matter matrix size:   Sx: 20      Sy: 20      Sz: 60

**Print to file**

Select matter cell:   I: 8      J: 9      K: 44

## Cell Processes

| Cell Name | Cell IdNb | Process Name | I Inf | I Sup |
|-----------|-----------|--------------|-------|-------|
| RINMC | 27386 | Exocytosis:IGF1->IGF1 field | 2 | 3 |
| RINMC | 27386 | CellDivision: (10;7;44)->(9;7;43) | 2 | 3 |
| RINMC | 27386 | CellMigration: (10;7;44)->(9;7;44) | 2 | 3 |
| RINMC | 27386 | Exocytosis:IGF1->IGF1 field | 3 | 4 |
| RINMC | 27386 | CellMigration: (9;7;44)->(8;8;43) | 3 | 4 |
| RINMC | 27386 | Exocytosis:IGF1->IGF1 field | 4 | 5 |
| RINMC | 27386 | CellMigration: (8;8;43)->(8;9;44) | 4 | 5 |

**Daughter cell**

Display
Clear
Exit

Self-description of time-stamped actions undertaken by an RINMC cell and its daughter during renal morphogenesis

## FIG. 22

EP 2 133 829 A1

Physics

Chemistry

Biochemistry

Biology

Medicine & engineering

Fundamental physical units
- Space (m)
- Time (s)
- Mass (kg)
- Ampere (amp)

Derived units
- Force $(kg.m.s^{-2})$
- Pression $(kg.m^3.s^{-2})$
- Fluxes $(m^3.s^{-1})$
- Energy $(kg.m^2.s^{-2})$
- Electrical charge
  (amp.s = Coulomb)
- ...

Scale/domain invariant
meta-concepts
- Material entity
- Fields (interactions)
- Processes
- States

States
- Microscopic (e.g. quantum energy level)
- Macroscopic (e.g. liquid, internal energy)...

Properties
- Microscopic (e.g. magnetic moment)
- Macroscopic (e.g. viscosity)...

FIG. 23

The Functional Unit

Structural Unit
(SU)

Functional Unit
(FU)

3D Space Matrix

MEM

Short term    Long term

Structural

Functional

Fields (bosons)

«Genes»

Molecular FU
(MFU)

FIG. 24

FIG. 25

EP 2 133 829 A1

Meta level:
• Reasoning
• Search
• Hyper-heuristics

Object level:
• Qualitative/quantitative simulation
• Self-assembly
• Optimization

FIG. 26

FIG. 27

FIG. 28

FIG. 29

3D space Matrix

**FIG. 30**

**FIG. 31**

Vessel Growth factor (VGF) emission

VSACs multiply in the direction the VGF field gradient while avoiding obstacles, e.g, a large artery

Virtual Stem « Axial » Cell (VSAC)

Secondary "atom" specifically sensitive to VGF

ICs differentiate become quiescent

VSAs multiplying in the absence of the VGF signal and differentiate into a Virtual Axial Cell (VAC)

A

FIG. 32A

(A)

Stem Endothelial
Cell (SEC)

VAC sends chemotaotic
attractive factor to an
Stem Endothelial Cell
(SEC)

In contact with
VAC, SEC
differentiates into
Early Endothelial
Cells (EEC) that
start multiplying
around VAC

VACs "trapped" inside
the structure created by
the EEC cells enter into
an apoptosis phase (they
commit suicide)

VACs that underwent
apoptosis liberate
particles that creates
an cosmotic
pressure that attracts
water molecules

As water enters the new
structure, hydrostatic
pressure increases and
the ECCs differentiate
again to become mature
endothelial cells (EC).
This is (one of) the
means blood vessels are
formed in the GMSP!

FIG. 32B

Growth factor (GP) emission

Early non-differentiated cells

Migration following GF gradients

Cell division follows migration

Growing tree-like structure inside the capsule: blood vessels, collecting ducts, nerves...

Cell migration follows division

Cells distal to the inducing field differentiate into non-migrating cells

Growing tree-like structure inside the capsule

Cell division follows migration

The process of migration/division / differentiation is reiterated until...

Inhibiting factors switch off the liberation of GF by the IC cells

Pressure due to growing tree structure

Viscosity gradient

FIG. 33

In the GMSP, computation can also be mixed: the release be an agent of an attractive chemical signal can be modeled by a diffusion equation. Target agents can, however, be modeled as discrete entities that sense their local environments and (deterministically) act accordingly

It can be mixed (continuous, discrete) with a stochastic component. In this example, Monte Carlo techniques accounting for the (deterministically) computed gradient can be applied to model the next positions of the activated agents

It can be mixed (continuous, discrete) with a stochastic and cognitive component! Remember, MFUs' can be "omnisoient" when need be...

Please after you! Considering the current global situation. I've got less chance that you to contribute!

Thanks!

FIG. 34

FU

CA3D ← FU    FU → FEM

At any given level, dynamic processes in two distinct FUs can be computed using methods corresponding to different levels of fidelity. Here, medium fidelity CA versus high fidelity FEM

FEM ← FU

Time

Step N-1

FEM ← FU    FU → FEM

Step N

Dynamic processes can be computed in a multi-step fashion from a coarse-grained spatial resolution to an arbitrary fine-grained resolution. A solution obtained at step N-1, on a cubic 3D Space Matrix of the mother FU with, say, $10^6$ elements can be the starting point (initial conditions) of step N involving a finer-grained discretization of space. In this example, a new computation can be refined at the level of the daughter FUs where their respective 3D Space Matrices have each $10^6$ elements again whereas as they represent half of the initial space. The process can be iterated an arbitrary number of times.

FIG. 35

GMSP

WN    WN

WN

WN = working node in a GRID and/or cluster

FIG. 36

FU_PartOf_FU

| FUSymbol1 | FUSymbol2 |
|-----------|-----------|
| RPYR_FU | KIDNEY_FU |
| NEPH_FU | RPYR_FU |
| HLDL_FU | NEPH_FU |
| HLTKAL_FU | NEPH_FU |
| HLTNAL_FU | NEPH_FU |
| RCORP_FU | NEPH_FU |
| RDT_FU | NEPH_FU |
| RPT_FU | NEPH_FU |
| ... | ... |

Hierarchies between FUs' and their corresponding "central" SU. Here there are three levels of FUs'. The Kidney_FU corresponds to the highest "root" FU. Upon reading this (portion of the) table the GMSP creates 10 Object FUs organizes the hierarchy (in terms of pointers) between them and allocates memory space for each to include companion structures such as the central SU, the short-term memory etc... Please do not pay attention to the barbaric symbols!

Cell_PartOf_SU

| CellSymbol | SUSymbol |
|------------|----------|
| E_HLDLC | HLDL |
| E_HLTKALC | HLTKAL |
| E_HLTNALC | HLTNAL |
| E_RDTPC | RDT |
| E_RPTC | RPT |
| HLDLC | HLDL |
| HLTKALC | HLTKAL |
| HLTNALC | HLTNAL |
| RDTPC | RDT |
| RPTC | RPT |
| ... | ... |

Upon reading this table, the GMSP creates new SUs and FUs representing cells. Each new cell FU/SU is then associated to the corresponding tissue FU/SU thus creating a forth level of FUs.

CellCytoMembrane_PartOf_Cell

| CellMembSymbol | CellSymbol |
|----------------|------------|
| E_HLDLC Membrane | E_HLDLC |
| ... | ... |

A fifth-level FU/SU is created corresponding to a sub-cellular object. Here the cell cytoplasmic membrane are "attached" to the corresponding cells

CellMembrane_Expresses_Receptor

| CellMembSymbol | ReceptorSymbol |
|----------------|----------------|
| E_HLDLC Membrane | FGFR_flg |
| E_HLDLC Membrane | IGF1R |
| E_HLTKALC Membrane | IGF2R |
| E_HLTKALC Membrane | Met |
| E_RDTPC Membrane | FGFR_flg |
| E_RDTPC Membrane | IGF1R |
| ... | ... |

A sixth-level FU/SU is created corresponding to a molecular object. Here, the cell molecular receptors are "attached" to the corresponding cell membranes. During (living organ) morphogenesis the receptors are typically the "secondary atoms" or "poles" of the corresponding cell-membrane MFU!

Cell_DifferentiatesInto_Cell

| CellSymbol1 | CellSymbol2 |
|-------------|-------------|
| E_RDTPC | RDTPC |
| E_HLDLC | HLDLC |
| E_HLTKALC | HLTKALC |
| E_HLTNALC | HLTNALC |
| E_RPTC | RPTC |
| ... | ... |

Dynamic events such as matter transformations are qualitatively represented in FOL sentences and their corresponding relational data base schema. Here, knowledge on how cell-types differentiate into other cell-types is illustrated. The GMSP introduces this knowledge in the proper (already created) FU objects. For instance, the first relation will be encoded in the "E_RDTPC" and "RDTPC" FUs long-term memories.

FIG. 37A

Cell_RespondsTo_Molecule

| CellSymbol | MoleculeSymbol | CellFunctionSymbol |
|---|---|---|
| C_C | Wnt4 | Differentiation |
| C_DTPC | Wnt4 | Differentiation |
| E_HLDLC | FGF2 | Division |
| E_HLTKALC | HGF | Division |
| E_HLTNALC | IGF1 | Division |
| E_RDTPC | IGF2 | Division |
| E_RPTC | IGF1 | Division |
| E_RPTC | IGF2 | Division |
| RINMC | FGF2 | Migration |
| ... | ... | ... |

Dynamic events such as reactions (which are a subset of matter transformations) are also represented in the FU's KBs. Here, knowledge on how cell-types react when stimulated by a given signaling molecule is illustrated. For the GMSP, the signaling molecules presented in this relation are typically "bosons".

Cell_Produces_SignalingMolecule

| CellSymbol | ProteinSymbol |
|---|---|
| E_RDTPC | FGF2 |
| E_RDTPC | HGF |
| E_HLDLC | VEGF |
| E_HLTKALC | VEGF |

Signal production is another kind of matter transformation. During morphgenesis, a cell producing a (boson) signal will computationally be transformed into a continuous field to which the cells or objects containing the proper receptors will be sensitive and react accordingly.

SignalingMolecule_Diffusion_Coefficient

| EntitySymbol | MoleculeSymbol | $X_w$ | $Y_w$ | $Z_w$ |
|---|---|---|---|---|
| ECM | FGF2 | 20 | 20 | 20 |
| ECM | HGF | 20 | 20 | 20 |
| ECM | IGF1 | 100 | 100 | 100 |
| ECM | IGF2 | 5 | 5 | 5 |
| ... | ... | ... | ... | ... |

Physical properties are also encoded in KB. They play a central role in morphogenesis, self-assembly and simulation in general. Here, the diffusion coefficients of signaling molecules are given with respect to a World Coordinate System that is common to all FUs and with respect to a particular entity (here an isotropic extra-cellular matrix). The values are given with respect to a reference scale also common to all FUs. All other physical properties are encoded in a similar way. When changing space-scales, these values are of course rescaled accordingly.

NB: A certain number of physical properties are represented as "gene strings" because one of the great challenge of problems such as morphogenesis where a great deal of necessary data is still unknown or unpublished is to define the values of these properties in order to generate the desired object! Thorough exploration of parameter-space such as provided by genetic algorithms (GA) can be necessary. This is the reason why each FU regardless of the level has a pool of "genes".

FIG. 37B

General schema

Core Knowledge → Inference → (Core Knowledge, Derived Knowledge)

## FIG. 37

Example: building its own specifications and model-generating program from static descriptions

SU_BranchesFrom_SU

| SUSymbol1 | SUSymbol2 |
|-----------|-----------|
| RDT | RCD |

SU_ContinuesInto_SU

| SUSymbol1 | SUSymbol2 |
|-----------|-----------|
| RDT | HLTKAL |
| HLTKAL | HLTNAL |
| HLTKAL | HLDL |

Automatically derived knowledge (Carried-out by the PSUs)

Inference

Events

| EventSymbol | SUSymbol1 | SUSymbol2 |
|-------------|-----------|-----------|
| BranchesFrom_1 | RDT | RCO |
| ContinuesInto_1 | RDT | HLTKAL |
| ContinuesInto_2 | HLTKAL | HLTNAL |
| ContinuesInto_3 | HLTNAL | HLDL |

Generated Events table.

Events (or processes) are derived from the initial KB, and uniquely identified

Events_TemporalOrder

| TemporalOrder | EventSymbol1 | EventSymbol2 |
|---------------|--------------|--------------|
| Before | BranchesFrom_1 | ContinuesInto_1 |
| Before | ContinuesInto_1 | ContinuesInto_2 |
| Before | ContinuesInto_2 | ContinuesInto_3 |

Generated Events_TemporalOrder Table.

Events can be temporally ordered either with explicit time values if knowledge is available or qualitatively as it is done in point and interval temporal logics

## FIG. 38A

Events_TemporalOrder

| TemporalOrder | EventSymbol1 | EventSymbol2 |
|---|---|---|
| Before | BranchesFrom_1 | ContinuesInto_1 |
| Before | ContinuesInto_1 | ContinuesInto_2 |
| Before | ContinuesInto_2 | ContinuesInto_3 |

Events (Goal)

| EventSymbol | SUSymbol1 | SUSymbol2 |
|---|---|---|
| BranchesFrom_1 | RDT | RCD |
| ContinuesInto_1 | RDT | HLTKAL |
| ContinuesInto_2 | HLTKAL | HLTNAL |
| ContinuesInto_3 | HLTNAL | HLDL |

Morphogenesis ←——————→ Compare

Generated 3D model

| EventSymbol | SUSymbol1 | SUSymbol2 |
|---|---|---|
| BranchesFrom_G1 | RDT | RCD |
| ContinuesInto_G1 | RDT | HLTKAL |
| ContinuesInto_G2 | HLTKAL | HLTNAL |
| ContinuesInto_G3 | HLTNAL | HLDL |

Generated Events Qualification. Depending on the context, during morphogenesis, scheduled events may not be carried-out. The self-descriptive capability of the GMSP objects allows the latter to generate qualitative descriptions "on the fly".

The "Events" relation constitutes a program-specification (the goal), while the "Events_TemporalOrder" constitutes a model-generating program. During morphogenesis, the GMSP schedules the events according to the "Events_TemporalOrder" relation and compares the generated "Events qualification" table with the "Events" table in order to verify the conformity of the generated structure.

FIG. 38B

Goal-directed self-assembly

Goal

Potential energy $E_0=1$

Parts

Solution 1: E=10 ☹

Solution 2: E=5

Solution 3 $E=E_0=1$ ☺

FIG. 39

# Goal-directed self-assembly with morphogenesis

Goal

Potential energy $E_0=1$

Parts

A      B      C

Best solution: E=1.5 corresponds
to the minimum energy solution but
is not connex. Parts B and C are ☹

Part C sends a morphogenetic
signal. A growth factor (boson)
specific to parts of the B type

Part B start to grow until...

D

...and a new putative part is
added to the (putative) Parts set

## FIG. 40

Goal

Current solution

Next move for part C: rotate or displace? either action diminishes the potential energy by the same amount. In terms of potential energy they are thus equivalent. The MFU via its corresponding FU can "climb up" the hierarchy until it "sees" the (global) current solution and compares it with the (global) goal. It then chooses to rotate first...

FIG. 41

Europäisches
Patentamt

European
Patent Office

Office européen
des brevets

**EUROPEAN SEARCH REPORT**

Application Number

EP 08 29 0535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NELSON MINAR, ROGER BURKHART, CHRIS LANGTON, MANOR ASKENAZI: "The Swarm simulation System: A Toolkit for Building Multi-Agent Simulations" WORKING PAPER 96-06-042, SANTA FE INSTITUTE, SANTA FE., [Online] 21 June 1996 (1996-06-21), pages 1-11, XP002515138 Retrieved from the Internet: URL:http://eprints.kfupm.edu.sa/71448/1/71 448.pdf> [retrieved on 2009-02-13] | 1-7, 10-14 | INV. G06N7/06 |
| Y | * the whole document * ----- | 8,9,15 | |
| D,Y | L. LI, N. KRASNOGOR, J. GARIBALDI.: "Automated Self-assembly Programming Paradigm: A Particle Swarm Realization" PROCEEDINGS OF THE WORKSHOP ON NATURE INSPIRED COOPERATIVE STRATEGIES FOR OPTIMIZATION, 31 December 1996 (1996-12-31), pages 123-135, XP002515139 Granada, Spain * paragraphs [0001], [0002] * ----- | 8,9,15 | TECHNICAL FIELDS SEARCHED (IPC) G06N |

The present search report has been drawn up for all claims

| Place of search | Date of completion of the search | Examiner |
|---|---|---|
| The Hague | 13 February 2009 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

### Patent documents cited in the description

- US 6957415 B
- US 20060212279 A1
- US 20070208677 A1
- US 20060269476 A1
- US 20030033127 A1
- US 20030018457 A1
- US 20030009099 A1
- US 20020091666 A1
- EP 00931339 A
- US 5947899 A

### Non-patent literature cited in the description

- **A. Adamatzky ; A. Wuensche ; B. De Lacy Costello.** Glider-based computing in reaction-diffusion hexagonal cellular automata. *Chaos, Solitons and Fractals,* 2006, vol. 27, 287-295
- **Allen J.F.** Towards a general theory of action and time. *Artificial Intelligence,* 1984, vol. 23 (2), 123-154
- Towards Virtual Physiological Human: Multilevel Modelling and Simulation of the Human Anatomy and Physiology. **N. Ayache ; J.-P. Boissel ; S. Brunak ; G. Clapworthy ; G. Lonsdale ; J. Fingberg ; A. Frangi ; G. Deco ; P. Hunter ; P. Nielsen.** Virtual Physiological Human: White paper. 2006
- Integrating design synthesis and assembly of structured objects in a visual design language. **O. Banyasad ; P. T. Cox.** Theory and Practice of Logic Programming. Cambridge University Press, 2005, vol. 5, 601-621
- **Bennett B. ; Galton A. P.** A unifying semantics for time and events. *Artificial Intelligence,* 2004, vol. 153, 13-48
- **Bochman A.** A causal approach to nonmonotonic reasoning. *Artificial Intelligence,* 2004, vol. 160 (1), 105-143
- **Brewster C. ; O'Hara K.** Knowledge representation with ontologies: Present challenges - Future possibilities. *Int. J. Human-Computer Studies,* 2007, vol. 65 (7), 563-568
- **Donnelly M.** A formal theory of reasoning about parthood, connection, and location. *Artif Intell,* 2004, vol. 160, 145-72
- **Dressler G. R.** The Cellular Basis of Kidney Development. *Annu. Rev. Cell Dev. Biol.,* 2006, vol. 22, 509-29
- Self-Organization of Colloidal Nanoparticles. **Dutta J. ; Hofmann H.** Encyclopedia of Nanoscience & Nanotechnology. American Scientific Publishers, 2005
- Nanotechnology in Cancer Drug Therapy: A Biocomputational Approach. **H.B. Frieboes ; J.P. Sinek ; O. Nalcioglu ; J.P. Fruehauf ; V. Cristini.** BioMEMS and Biomedical Nanotechnology. Springer, 2006
- **A. K. Goel ; S. R. Bhatta.** Use of design patterns in analogy-based design. *Advanced Engineering Informatics,* 2004, vol. 18, 85-94
- **F.J. Higuera ; S. Succi ; R. Benzi.** Lattice gas dynamics with enhanced collision. *Europhysics letters,* 1989, vol. 9, 345-349
- Self Generating Metaheuristics in Bioinformatics: The Proteins Structure Comparison Case. **Krasnogor N.** Genetic Programming and Evolvable Machines. Kluwer Academic Publishers, 2004, vol. 5, 181-201
- Automatic Generation of Urban Zones. **M. Larive ; Y. Dupuy ; V. Gaildrat.** The 13-th International Conference in Central Europe on Computer Graphics, Visualization and Computer Vision, WSCG'2005. 2005, 9-12
- **D.-Y. Lee ; R. Zimmer ; S.-Y. Lee ; S. Park.** Colored Petri net modelling and simulation of signal transduction pathways. *Metabolic Engineering,* 2006, vol. 8 (2), 112-122
- **Li L. ; N. Krasnogor ; J. Garibaldi.** Automated Self_assembly Programming Paradigm: Initial investigation. *Proceedings of the Third IEEE International Workshop on Engineering of Autonomic & Autonomous Systems,* 2006, 25-34
- **Li L. ; N. Krasnogor ; J. Garibaldi.** Automated Self_assembly Programming Paradigm: A Swarm Realization. *Proceedings of the Workshop on Nature Inspired Cooperative Strategies for Optimization,* 2006, 123-135
- **Keretho S ; Loganantharaj R.** Reasoning about Networks of Temporal Relations and Its Applications to Problem Solving. *J. Appl. Intell.,* 1993, vol. 3, 47-70

- Emerging technologies for enterprise optimization in the process industries. **R. Kulhavy ; J. Lu ; T. Samad.** Chemical Process Control VI: Sixth International Conference on Chemical Process Control. ALChE Symposium Series, 2001, vol. 98, 352-363
- **Melin J. ; Quake S.R.** Microfluidic Large-Scale Integration: The Evolution of Design Rules for Biological Automation. *Annu. Rev. Biophys. Biomol. Struct.,* 2007, vol. 36, 213-31
- **Meno-Tetang G. M. L. ; H. Li ; S. Mis ; N. Pyszczynski ; P. Heining ; P. Lowe ; W. J. Jusko.** Physiologically Based Pharmacokinetic Modelling of FTY720 (2-Amino-2[2-(-4-octylphenyl)ethyl]propane-1,3-diol hydrochloride) in Rats After Oral and Intravenous Doses. *Drug Metabolism And Disposition,* 2006, vol. 34 (9), 1480-1487
- **Olivier, B. G. ; Rohwer, J. M. ; Hofmeyr, J. H.** Modeling cellular systems with PySCeS. *Bioinformatics,* 2005, vol. 21, 560-561
- **Popova-Zeugmann L. ; M. Heiner ; I. Koch.** Time Petri Nets for Modelling and Analysis of Biochemical Networks. *Fundamenta Informaticae,* 2005, vol. 67, 149-162
- **Prendinger H. ; Ishizuka M.** A creative abduction approach to scientific and knowledge discovery. *Knowledge-Based Systems,* 2005, vol. 18 (7), 321-326
- Combining Metaheuristics and Exact Algorithms in Combinatorial Optimization: A Survey and Classification. **Puchinger J. ; Raidl G. R.** Proceedings of the First International Work-Conference on the Interplay Between Natural and Artificial Computation. Springer, 2005, vol. 3562 of, 41-53
- **Reed C.** Representing dialogic argumentation. *Knowledge-Based Systems,* 2006, vol. 19, 22-31

- **T. Rodgers ; M. Rowland.** Physiologically Based Pharmacokinetic Modelling 2: Predicting the Tissue Distribution of Acids, Very Weak Bases, Neutrals and Zwitterions. *Journal Of Pharmaceutical Sciences,* 2006, vol. 95 (6), 1238-1257
- **Schulz S. ; Hahn U.** Towards the ontological foundations of symbolic biological theories. Artificial Intelligence. *Medicine,* 2007, vol. 39, 237-250
- **Stewart R.** Genetic Programming: Computers That Program Themselves. *CSCI 373: Artificial Intelligence,* 18 May 2004
- **Tannenbaum E.** When does division of labor lead to increased system output?. *Journal of Theoretical Biology,* 2007, vol. 247, 413-425
- **T. Turner ; S. Schnell ; K. Burrage.** Stochastic approaches for modelling in vivo reactions. Computational biology and chemistry. *Stochastic approaches for modelling in vivo reactions. Computational biology and chemistry,* 2004, vol. 28 (3), 165-178
- **K. Iguchi ; S. Kinoshita ; H. S. Yamada.** Boolean dynamics of Kauffman models with a scale-free network. *Journal of Theoretical Biology,* 2007, vol. 247, 138-151
- **Ujjin S. ; Bentley P.J.** Particle swarm optimization recommender system. *Proceedings of the IEEE Swarm Intelligence Symposium,* 2003, 124-131
- **Whitesides G. M. ; Grzybowski B.** Self-Assembly at All Scales. *Science,* 2002, vol. 295 (5564), 2418-2421
- **Wolkenhauer O. ; M. Ullah ; W. Kolch ; K. Cho.** Modeling and simulation of intracellular dynamics:Choosing an appropriate framework. *IEEE Transactions on NanoBioscience,* 2004, vol. 3 (3), 200-207
- **Wriggersa P. et al.** Intelligent support of engineering analysis using ontology and case-based reasoning. *Engineering Applications of Artificial Intelligence,* 2007, vol. 20, 709-720